(19) Europäisches Patentamt / European Patent Office / Office européen des brevets

(11) **EP 3 021 091 B1**

(12) **EUROPEAN PATENT SPECIFICATION**

(45) Date of publication and mention
of the grant of the patent:
**18.11.2020 Bulletin 2020/47**

(51) Int Cl.:
*G01F 1/696* (2006.01)     *G01F 1/692* (2006.01)
*G01P 5/10* (2006.01)     *G01P 5/12* (2006.01)

(21) Application number: **14822070.0**

(86) International application number:
**PCT/JP2014/052823**

(22) Date of filing: **07.02.2014**

(87) International publication number:
**WO 2015/004936 (15.01.2015 Gazette 2015/02)**

(54) **THERMAL FLOW METER**

WÄRMEDURCHFLUSSMESSER

DÉBITMÈTRE THERMIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **11.07.2013 JP 2013145696**

(43) Date of publication of application:
**18.05.2016 Bulletin 2016/20**

(73) Proprietor: **Hitachi Automotive Systems, Ltd.
Hitachinaka-shi, Ibaraki 312-8503 (JP)**

(72) Inventor: **MORINO, Takeshi
Hitachinaka-shi
Ibaraki 312-8503 (JP)**

(74) Representative: **MERH-IP Matias Erny Reichl
Hoffmann
Patentanwälte PartG mbB
Paul-Heyse-Strasse 29
80336 München (DE)**

(56) References cited:
EP-A2- 1 992 917     JP-B2- 3 433 124
US-A1- 2004 098 210     US-A1- 2008 295 590

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a thermal flow meter.

Background Art

PTL 1 discloses a technology of a flow rate sensor that detects a flow rate of a measurement target gas from a temperature difference between temperatures detected by thermocouples arranged on upstream and downstream sides of a heater. When a contamination, such as carbon and oil mist, which is included in the measurement target gas, adheres to and is deposited on a heat transfer surface in which the heater and the thermocouple are provided, heat capacity increases and an output characteristic changes compared with a shipment time, which results in generation of an error of detection accuracy.

PTL 2 discloses a technology for detecting the temperature on the upstream side of the heater from the temperature difference between a monitoring thermocouple arranged on the upstream side of a diaphragm of a semiconductor substrate and a sensing thermocouple arranged in the diaphragm, and estimating an amount of the contamination deposited on the heat transfer surface based on a change amount of the temperature.

Citation List

Patent Literatures

PTL 1: JP 2007-279036 A
PTL 2: EP 1065475
PTL 3: US 2004/098210 A1 describes a flow sensor and a flow rate measuring method, in which an error caused by dust attached to the flow sensor is corrected. PTL 4: US 2008/295590 A1 describes a thermal type flow meter that has a first heating resistor, a second heating resistor for blocking heat transfer from the first heating resistor to a console, a temperature measuring resistor interposed between the two heating resistors, and a controller for calculating a flow rate unrelated to temperatures of fluid from temperatures of the resistors and currents supplied to the heating resistors.
PTL 5: EP 1 992 917 A2 describes a thermal flowmeter that can provide high measurement accuracy over a long period of time by suppressing the characteristics degradation due to adhering contaminants.

Summary of Invention

Technical Problem

The contamination is not evenly deposited on the heat transfer surface, but deposited so as to form shading. The contamination included in the measurement target gas is subjected to thermophoresis from a high-temperature side toward a low-temperature-side side due to a temperature gradient formed by the heater, and therefore the contamination intensively adheres to a place near the heater in the heat transfer surface. Accordingly, sufficient estimation accuracy is hardly obtained in the case in which the deposit amount of the contamination is estimated from the difference between the temperature measured on the upstream side of the diaphragm in which the temperature gradient is formed and the temperature on the diaphragm like the technology disclosed in PTL 2. The deposit amount of the contamination cannot correctly be estimated because the change amount of the temperature varies depending on a kind of the contamination.

An object of the present invention is to provide a thermal flow meter that can continuously detect the flow rate with high accuracy even if the contamination is deposited.

Solution to Problem

The object is solved by the invention according to claim 1. The dependent claims describe further preferred developments. In particular, a thermal flow meter that measures a flow rate of a measurement target gas passing in a passage by transferring heat to the measurement target gas through a heat transfer surface in the passage, the thermal flow meter includes: a semiconductor member in which a thin area constituting the heat transfer surface is provided; a heat generator that is provided in the thin area to heat the measurement target gas; temperature difference detecting means for detecting at least one of a temperature difference in a flow direction of the measurement target gas in the thin area and in an upstream area of an area on an upstream side of the heat generator and a temperature difference in the flow direction of the measurement target gas in the thin area and in a downstream area of an area on a downstream side of the heat generator; heat capacity calculating means for calculating heat capacity in the thin area based on a temperature difference detected by the temperature difference detecting means; and thermal conductivity change amount estimating means for estimating a thermal conductivity change amount in the thin area based on the heat capacity calculated by the heat capacity calculating means.

Advantageous Effects of Invention

According to the invention, for example, in the case in which the contamination is deposited on the heat transfer surface in the thin area, a flow rate detection amount can be calibrated based on the change amount of the thermal conductivity, and the flow rate detection accuracy can be maintained at a high level. Other problems, configurations, and advantageous effects will become clear the description of the following embodiment.

Brief Description of Drawings

[FIG. 1] FIG. 1 is a system diagram illustrating an internal combustion engine control system where a thermal flow meter according to an embodiment of the invention is used.
[FIG. 2] FIGS. 2(A) and 2(B) are diagrams illustrating an appearance of the thermal flow meter, in which FIG. 2(A) is a left side view, and FIG. 2(B) is a front view.
[FIG. 3] FIGS. 3(A) and 3(B) are diagrams illustrating an appearance of the thermal flow meter, in which FIG. 3(A) is a right side view, and FIG. 3(B) is a rear view.
[FIG. 4] FIGS. 4(A) and 4(B) are diagrams illustrating an appearance of the thermal flow meter, in which FIG. 4(A) is a plan view, and FIG. 4(B) is a bottom view.
[FIG. 5] FIGS. 5(A) and 5(B) are diagrams illustrating a housing of the thermal flow meter, in which FIG. 5(A) is a left side view of the housing, and FIG. 5(B) is a front view of the housing.
[FIG. 6] FIGS. 6(A) and 6(B) are diagrams illustrating a housing of the thermal flow meter, in which FIG. 6(A) is a right side view of the housing, and FIG. 6(B) is a rear view of the housing.
[FIG. 7] FIGS. 7(A) to 7(C) are diagrams illustrating an appearance of a front cover, in which FIG. 7(A) is a left side view, FIG. 7(B) is a front view, and FIG. 7(C) is a plan view.
[FIG. 8] FIGS. 8(A) to 8(C) are diagrams illustrating an appearance of a rear cover 304, in which FIG. 8(A) is a left side view, FIG. 8(B) is a front view, and FIG. 8(C) is a plan view.
[FIG. 9] FIGS. 9(A) to 9(C) are exterior views illustrating a circuit package, in which FIG. 9(A) is a left side view, FIG. 9(B) is a front view, and FIG. 9(C) is a rear view.
[FIG. 10] FIG. 10 is a circuit diagram illustrating a flow rate detection circuit of the thermal flow meter according to an embodiment.
[FIG. 11] FIG. 11 is a circuit diagram illustrating a circuit pattern of a flow rate detection circuit according to an embodiment.
[FIG. 12] FIG. 12 is a circuit diagram illustrating a circuit pattern of a flow rate detection circuit according to an embodiment.
[FIG. 13] FIG. 13 is a circuit diagram illustrating a circuit pattern of a flow rate detection circuit according to an embodiment.
[FIG. 14] FIG. 14 is a circuit configuration diagram illustrating a flow rate detection circuit of a thermal flow meter according to an embodiment.

Description of Embodiments

Examples for embodying the invention described below (hereinafter, referred to as embodiments) solves various problems desired as a practical product. In particular, the embodiments solve various problems for use in a measurement device for measuring an intake air amount of a vehicle and exhibit various effects. One of various problems addressed by the following embodiments is described in the "Problems to Be Solved by the Invention" described above, and one of various effects obtained by the following embodiments is described in the "Effects of the Invention." Various problems solved by the following embodiments and various effects obtained the following embodiments will be further described in the "Description of Embodiments." Therefore, it would be appreciated that the following embodiments also include other effects or problems obtained or addressed by the embodiments than those described in "Problems to Be Solved by the Invention" or "Effects of the Invention."
In the following embodiments, like reference numerals denote like elements even when they are inserted in different drawings, and they have the same functional effects. The components that have been described in previous paragraphs may not be described by denoting reference numerals and signs in the drawings.

1. Internal Combustion Engine Control System Having Thermal Flow Meter According to One Embodiment of the Invention

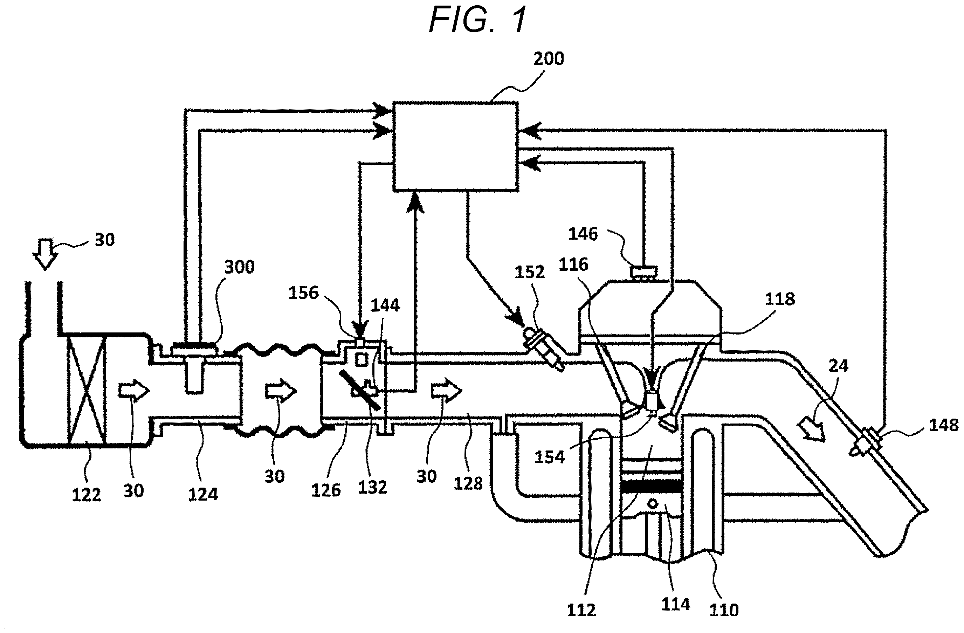

FIG. 1 is a system diagram illustrating an electronic fuel injection type internal combustion engine control system having a thermal flow meter according to one embodiment of the invention. Based on the operation of an internal combustion engine 110 having an engine cylinder 112 and an engine piston 114, an intake air as a measurement target gas 30 is inhaled from an air cleaner 122 and is guided to a combustion chamber of the engine cylinder 112 through a main passage 124 including, for example, an intake body, a throttle body 126, and an intake manifold 128. A flow rate of the measurement target gas 30 as an intake air guided to the combustion chamber is measured by a thermal flow meter 300 according to the invention. A fuel is supplied from a fuel injection valve 152 based on the measured flow rate and is mixed with the measurement target gas 30 as an intake air, so that the mixed gas is guided to the combustion chamber. It is noted that, in this embodiment, the fuel injection valve 152 is provided in an intake port of the internal combustion engine, and the fuel injected to the intake port is mixed with the measurement target gas 30 to form a mixed gas, so that the mixed gas is guided to the combustion chamber through an inlet valve 116 to generate mechanical energy by burning.

In recent years, in many vehicles, a direct fuel injection method having excellent effects in exhaust gas purification or fuel efficiency improvement is employed, in which a fuel injection valve 152 is installed in a cylinder head of the internal combustion engine, and fuel is directly injected into each combustion chamber from the fuel injection valve 152. The thermal flow meter 300 may be similarly used in a type in which fuel is directly injected into each combustion chamber as well as a type in which fuel is injected into the intake port of the internal combustion engine of FIG. 1. A method of measuring control parameters, including a method of using the thermal flow meter 300, and a method of controlling the internal combustion engine, including a fuel supply amount or an ignition timing, are similar in basic concept between both types. A representative example of both types, a type in which fuel is injected into the intake port is illustrated in FIG. 1.

The fuel and the air guided to the combustion chamber have a fuel/air mixed state and are explosively combusted by spark ignition of the ignition plug 154 to generate mechanical energy. The gas after combustion is guided to an exhaust pipe from the exhaust valve 118 and is discharged to the outside of the vehicle from the exhaust pipe as an exhaust gas 24. The flow rate of the measurement target gas 30 as an intake gas guided to the combustion chamber is controlled by the throttle valve 132 of which opening level changes in response to manipulation of an accelerator pedal. The fuel supply amount is controlled based on the flow rate of the intake gas guided to the combustion chamber, and a driver controls an opening level of the throttle valve 132, so that the flow rate of the intake air guided to the combustion chamber is controlled. As a result, it is possible to control mechanical energy generated by the internal combustion engine.

1.1 Overview of Control of Internal Combustion Engine Control System

The flow rate and the temperature of the measurement target gas 30 as an intake air that is received from the air cleaner 122 and flows through the main passage 124 are measured by the thermal flow meter 300, and an electric signal representing the flow rate and the temperature of the intake air is input to the control device 200 from the thermal flow meter 300. In addition, an output of the throttle angle sensor 144 that measures an opening level of the throttle valve 132 is input to the control device 200, and an output of a rotation angle sensor 146 is input to the control device 200 to measure a position or a condition of the engine piston 114, the intake valve 116, or the exhaust valve 118 of the internal combustion engine and a rotational speed of the internal combustion engine. In order to measure a mixed ratio state between the fuel amount and the air amount from the condition of exhaust gas 24, an output of an oxygen sensor 148 is input to the control device 200.

The control device 200 computes a fuel injection amount or an ignition timing based on a flow rate of the intake air as an output of the thermal flow meter 300 and a rotational speed of the internal combustion engine measured from an output of the rotation angle sensor 146. Based on the computation result of them, a fuel amount supplied from the fuel injection valve 152 and an ignition timing for igniting the ignition plug 154 are controlled. In practice, the fuel supply amount or the ignition timing is further accurately controlled based on a change of the intake temperature or the throttle angle measured by the thermal flow meter 300, a change of the engine rotation speed, and an air-fuel ratio state measured by the oxygen sensor 148. In the idle driving state of the internal combustion engine, the control device 200 further controls the air amount bypassing the throttle valve 132 using an idle air control valve 156 and controls a rotation speed of the internal combustion engine under the idle driving state.

1.2 Importance of Improvement of Measurement Accuracy of Thermal Flow Meter and Environment for Mounting Thermal Flow Meter

Both the fuel supply amount and the ignition timing as a main control amount of the internal combustion engine are computed by using an output of the thermal flow meter 300 as a main parameter. Therefore, improvement of the measurement accuracy, suppression of aging, and improvement of reliability of the thermal flow meter 300 are important for improvement of control accuracy of a vehicle or obtainment of reliability. In particularly, in recent years, there are a lot of demands for fuel saving of vehicles and exhaust gas purification. In order to satisfy such demands, it is significantly important to improve the measurement accuracy of the flow rate of the measurement target gas 30 as an intake air measured by the thermal flow meter 300. In addition, it is also important to maintain high reliability of the thermal flow meter 300.

A vehicle having the thermal flow meter 300 is used under an environment where a temperature change is significant or a coarse weather such as a storm or snow. When a vehicle travels a snowy road, it travels through a road on which an anti-freezing agent is sprayed. It is preferable that the thermal flow meter 300 be designed considering a countermeasure for the temperature change or a countermeasure for dust or pollutants under such a use environment. Furthermore, the thermal flow meter 300 is installed under an environment where the internal combustion engine is subjected to vibration. It is also desired to maintain high reliability for vibration.

The thermal flow meter 300 is installed in the intake pipe influenced by heat from the internal combustion engine. For this reason, the heat generated from the internal combustion engine is transferred to the thermal flow meter 300 via the intake pipe which is a main passage 124. Since the thermal flow meter 300 measures the flow rate of the measurement target gas by transferring heat with the measurement target gas, it is important to suppress influence of the heat from the outside as much as possible.

The thermal flow meter 300 mounted on a vehicle solves the problems described in "Problems to Be Solved by the Invention" and provides the effects described in "Effects of the Invention" as described below. In addition, as described below, it solves various problems demanded as a product and provides various effects considering various problems described above. Specific problems or effects solved or provided by the thermal flow meter 300 will be described in the following description of embodiments.

2. Configuration of Thermal Flow Meter 300

2.1 Exterior Structure of Thermal Flow Meter 300

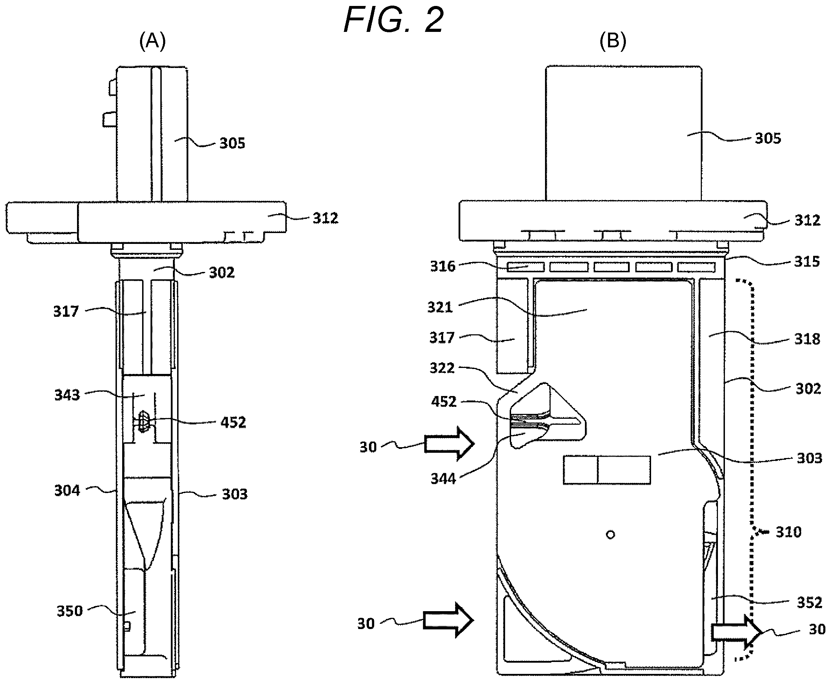

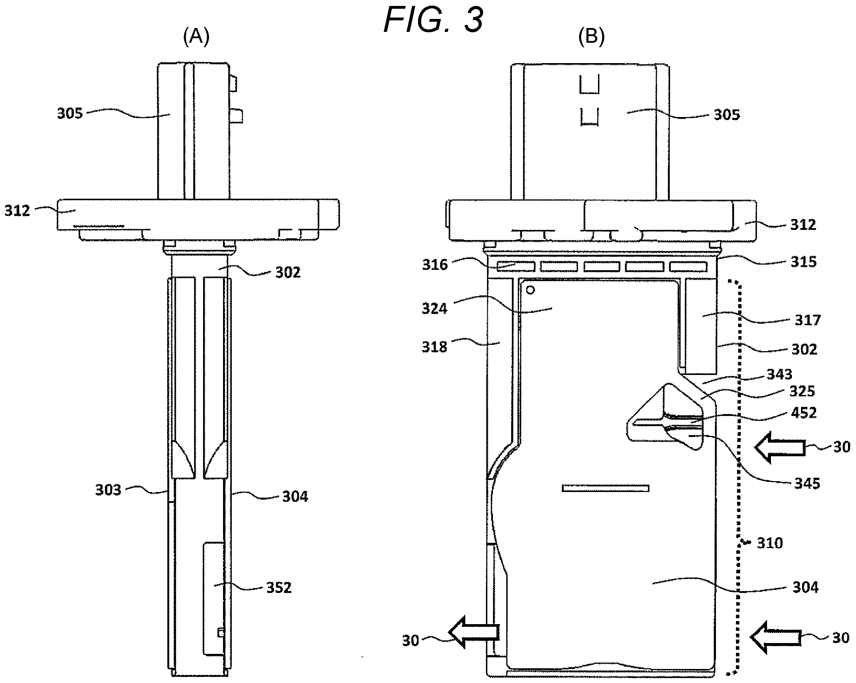

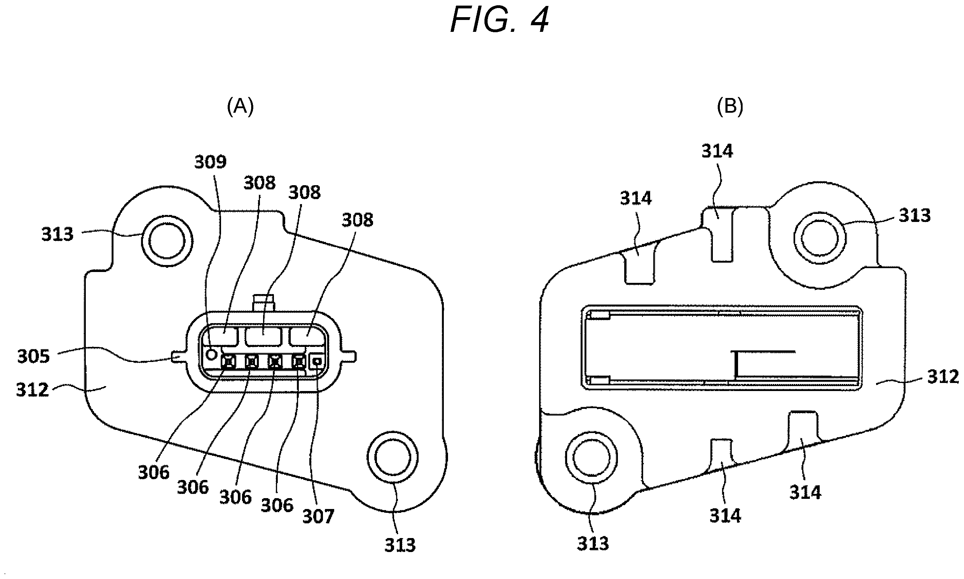

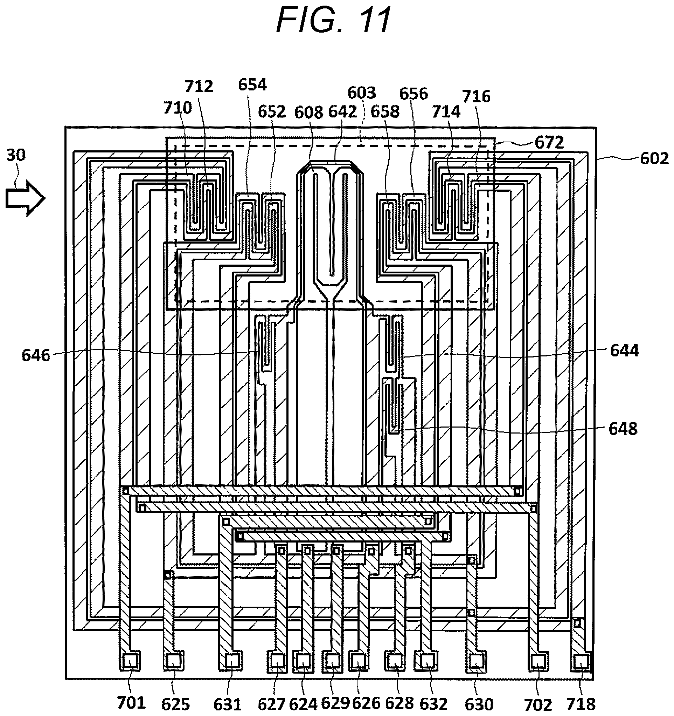

FIGS. 2(A), 2(B), 3(A), 3(B), 4(A), and 4(B) are diagrams illustrating the exterior of the thermal flow meter 300, in which FIG. 2(A) is left side view of the thermal flow meter 300, FIG. 2(B) is a front view, FIG. 3(A) is a right side view, FIG. 3(B) is a rear view, FIG. 4(A) is a plan view, and FIG. 4(B) is a bottom view. The thermal flow meter 300 includes a housing 302, a front cover 303, and a rear cover 304. The housing 302 includes a flange 312 for fixing the thermal flow meter 300 to an intake body as a main passage 124, an external connector 305 having an external terminal 306 for electrical connection to external devices, and a measuring portion 310 for measuring a flow rate and the like. The measuring portion 310 is internally provided with an auxiliary passage trench for making an auxiliary passage. In addition, the measuring portion 310 is internally provided with a circuit package 400 having a flow rate detecting portion 602 (refer to FIG. 11) for measuring a flow rate of the measurement target gas 30 flowing through the main passage 124 or a temperature detecting portion 452 for measuring a temperature of the measurement target gas 30 flowing through the main passage 124.

2.2 Effects Based on Exterior Structure of Thermal Flow Meter 300

Since the inlet port 350 of the thermal flow meter 300 is provided in the leading end side of the measuring portion 310 extending toward the center direction of the main passage 124 from the flange 312, the gas in the vicinity of the center portion distant from the inner wall surface instead of the vicinity of the inner wall surface of the main passage 124 may be input to the auxiliary passage. For this reason, the thermal flow meter 300 can measure a flow rate or a temperature of the air distant from the inner wall surface of the main passage 124 of the thermal flow meter 300, so that it is possible to suppress a decrease of the measurement accuracy caused by influence of heat and the like. In the vicinity of the inner wall surface of the main passage 124, the thermal flow meter 30 is easily influenced by the temperature of the main passage 124, so that the temperature of the measurement target gas 30 has a different condition from an original temperature of the gas and exhibits a condition different from an average condition of the main gas inside the main passage 124. In particular, if the main passage 124 serves as an intake body of the engine, it may be influenced by the heat from the engine and remains in a high temperature. For this reason, the gas in the vicinity of the inner wall surface of the main passage 124 has a temperature higher than the original temperature of the main passage 124 in many cases, so that this degrades the measurement accuracy.

In the vicinity of the inner wall surface of the main passage 124, a fluid resistance increases, and a flow velocity decreases, compared to an average flow velocity in the main passage 124. For this reason, if the gas in the vicinity of the inner wall surface of the main passage 124 is input to the auxiliary passage as the measurement target gas 30, a decrease of the flow velocity against the average flow velocity in the main passage 124 may generate a measurement error. In the thermal flow meter 300 illustrated in FIGS. 2(A), 2(B), 3(A), 3(B), and 4(A) to 4(C), since the inlet port 350 is provided in the leading end of the thin and long measuring portion 310 extending to the center of the main passage 124 from the flange 312, it is possible to reduce a measurement error relating to a decrease of the flow velocity in the vicinity of the inner wall surface. In the thermal flow meter 300 illustrated in FIGS. 2(A), 2(B), 3(A), 3(B), and 4(A) to 4(C), in addition to the inlet port 350 provided in the leading end of the measuring portion 310 extending to the center of the main passage 124 from the flange 312, an outlet port of the auxiliary passage is also provided in the leading end of the measuring portion 310. Therefore, it is possible to further reduce the measurement error.

The measuring portion 310 of the thermal flow meter 300 has a shape extending from the flange 312 to the center direction of the main passage 124, and its leading end is provided with the inlet port 350 for inputting a part of the measurement target gas 30 such as an intake air to the auxiliary passage and the outlet port 352 for returning the measurement target gas 30 from the auxiliary passage to the main passage 124. While the measuring portion 310 has a shape extending along an axis directed to the center from the outer wall of the main passage 124, its width has a narrow shape as illustrated in FIGS. 2(A) and 3(A). That is, the measuring portion 310 of the thermal flow meter 300 has a front surface having an approximately rectangular shape and a side surface having a thin width. As a result, the thermal flow meter 300 can have an auxiliary passage having a sufficient length, and it is possible to suppress a fluid resistance to a small value for the measurement target gas 30. For this reason, using the thermal flow meter 300, it is possible to suppress the fluid resistance to a small value and measure the flow rate of the measurement target gas 30 with high accuracy.

2.3 Structure of Temperature Detecting Portion 452

The inlet port 343 is positioned in the flange 312 side from the auxiliary passage provided in the leading end side of the measuring portion 310 and is opened toward an upstream side of the flow of the measurement target gas 30 as illustrated in FIGS. 2(A), 2(B), 3(A), and 3(B). Inside the inlet port 343, a temperature detecting portion 452 is arranged to measure a temperature of the measurement target gas 30. In the center of the measuring portion 310 where the inlet port 343 is provided, an upstream-side outer wall inside the measuring portion 310 included the housing 302 is hollowed toward the downstream side, the temperature detecting portion 452 is formed to protrude toward the upstream side from the upstream-side outer wall having the hollow shape. In addition, front and rear covers 303 and 304 are provided in both sides of the outer wall having a hollow shape, and the upstream side ends of the front and rear covers 303 and 304 are formed to protrude toward the upstream side from the outer wall having the hollow shape. For this reason, the outer wall having the hollow shape and the front and rear covers 303 and 304 in its both sides form the inlet port 343 for receiving the measurement target gas 30. The measurement target gas 30 received from the inlet port 343 makes contact with the temperature detecting portion 452 provided inside the inlet port 343 to measure the temperature of the temperature detecting portion 452. Furthermore, the measurement target gas 30 flows along a portion that supports the temperature detecting portion 452 protruding from the outer wall of the housing 302 having a hollow shape to the upstream side, and is discharged to the main passage 124 from a front side outlet port 344 and a rear side outlet port 345 provided in the front and rear covers 303 and 304.

2.4 Structure and Effects of Flange 312

The flange 312 is provided with a plurality of hollows 314 on its lower surface which is a portion facing the main passage 124, so as to reduce a heat transfer to the main passage 124 and make it difficult for the thermal flow meter 300 to receive influence of the heat. The screw hole 313 of the flange 312 is provided to fix the thermal flow meter 300 to the main passage 124, and a space is formed between a surface facing the main passage 124 around each screw hole 313 and the main passage 124 such that the surface facing the main passage 124 around the screw hole 313 recedes from the main passage 124. As a result, the flange 312 has a structure capable of reducing heat transfer from the main passage 124 to the thermal flow meter 300 and preventing degradation of the measurement accuracy caused by heat. Furthermore, in addition to the heat conduction reduction effect, the hollow 314 can reduce influence of contraction of the resin of the flange 312 during the formation of the housing 302.

The thermal insulator 315 is provided in the measuring portion 310 side of the flange 312. The measuring portion 310 of the thermal flow meter 300 is inserted into the inside from an installation hole provided in the main passage 124 so that the thermal insulator 315 faces the inner surface of the installation hole of the main passage 124. The main passage 124 serves as, for example, an intake body, and is maintained at a high temperature in many cases. Conversely, it is conceived that the main passage 124 is maintained at a significantly low temperature when the operation is activated in a cold district. If such a high or low temperature condition of the main passage 124 affects the temperature detecting portion 452 or the measurement of the flow rate described below, the measurement accuracy is degraded. For this reason, a plurality of hollows 316 are provided side by side in the thermal insulator 315 adjacent to the hole inner surface of the main passage 124, and a width of the thermal insulator 315 adjacent to the hole inner surface between the neighboring hollows 316 is significantly thin, which is equal to or smaller than 1/3 of the width of the fluid flow direction of the hollow 316. As a result, it is possible to reduce influence of temperature. In addition, a portion of the thermal insulator 315 becomes thick. During a resin molding of the housing 302, when the resin is cooled from a high temperature to a low temperature and is solidified, volumetric shrinkage occurs so that a deformation is generated as a stress occurs. By forming the hollow 316 in the thermal insulator 315, it is possible to more uniformize the volumetric shrinkage and reduce stress concentration.

The measuring portion 310 of the thermal flow meter 300 is inserted into the inside from the installation hole provided in the main passage 124 and is fixed to the main passage 124 using the flange 312 of the thermal flow meter 300 with screws. The thermal flow meter 300 is preferably fixed to the installation hole provided in the main passage 124 with a predetermined positional relationship. The hollow 314 provided in the flange 312 may be used to determine a positional relationship between the main passage 124 and the thermal flow meter 300. By forming the convex portion in the main passage 124, it is possible to provide an insertion relationship between the convex portion and the hollow 314 and fix the thermal flow meter 300 to the main passage 124 in an accurate position.

2.5 Structures and Effects of External Connector 305 and Flange 312

FIG. 4(A) is a plan view illustrating the thermal flow meter 300. Four external terminal 306 and a calibration terminal 307 are provided inside the external connector 305. The external terminals 306 include terminals for outputting the flow rate and the temperature as a measurement result of the thermal flow meter 300 and a power terminal for supplying DC power for operating the thermal flow meter 300. The calibration terminal 307 is used to measures the produced thermal flow meter 300 to obtain a calibration value of each thermal flow meter 300 and store the calibration value in an internal memory of the thermal flow meter 300. In the subsequent measurement operation of the thermal flow meter 300, the calibration data representing the calibration value stored in the memory is used, and the calibration terminal 307 is not used. Therefore, in order to prevent the calibration terminal 307 from hindering connection between the external terminals 306 and other external devices, the calibration terminal 307 has a shape different from that of the external terminal 306. In this embodiment, since the calibration terminal 307 is shorter than the external terminal 306, the calibration terminal 307 does not hinder connection even when the connection terminal connected to the external terminal 306 for connection to external devices is inserted into the external connector 305. In addition, since a plurality of hollows 308 are provided along the external terminal 306 inside the external connector 305, the hollows 308 reduce stress concentration caused by shrinkage of resin when the resin as a material of the flange 312 is cooled and solidified.

Since the calibration terminal 307 is provided in addition to the external terminal 306 used during the measurement operation of the thermal flow meter 300, it is possible to measure characteristics of each thermal flow meter 300 before shipping to obtain a variation of the product and store a calibration value for reducing the variation in the internal memory of the thermal flow meter 300. The calibration terminal 307 is formed in a shape different from that of the external terminal 306 in order to prevent the calibration terminal 307 from hindering connection between the external terminal 306 and external devices after the calibration value setting process. In this manner, using the thermal flow meter 300, it is possible to reduce a variation of each thermal flow meter 300 before shipping and improve measurement accuracy.

3. Entire Structure of Housing 302 and Its Effects

3.1 Structures and Effects of Auxiliary Passage and Flow Rate Detecting Portion

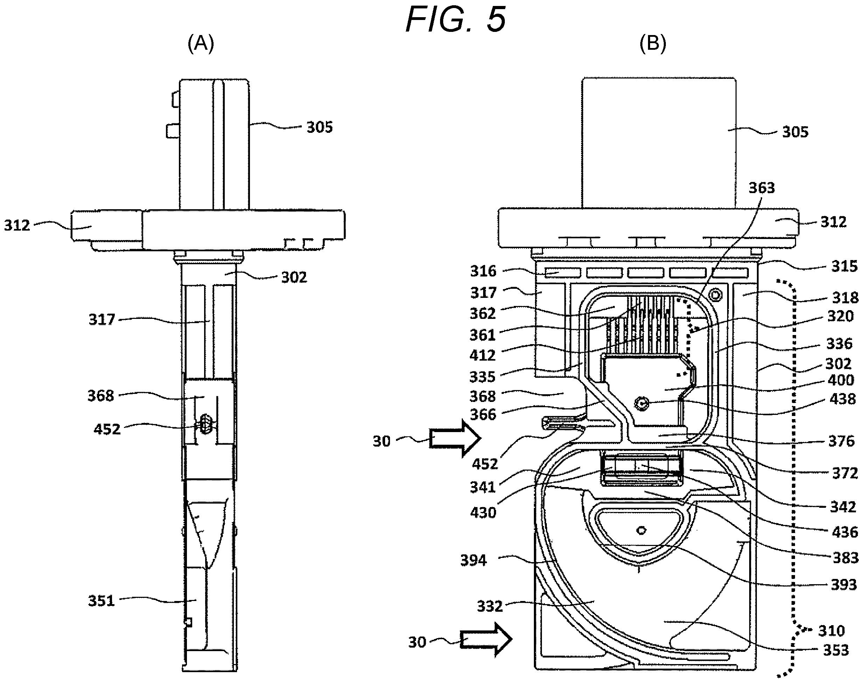

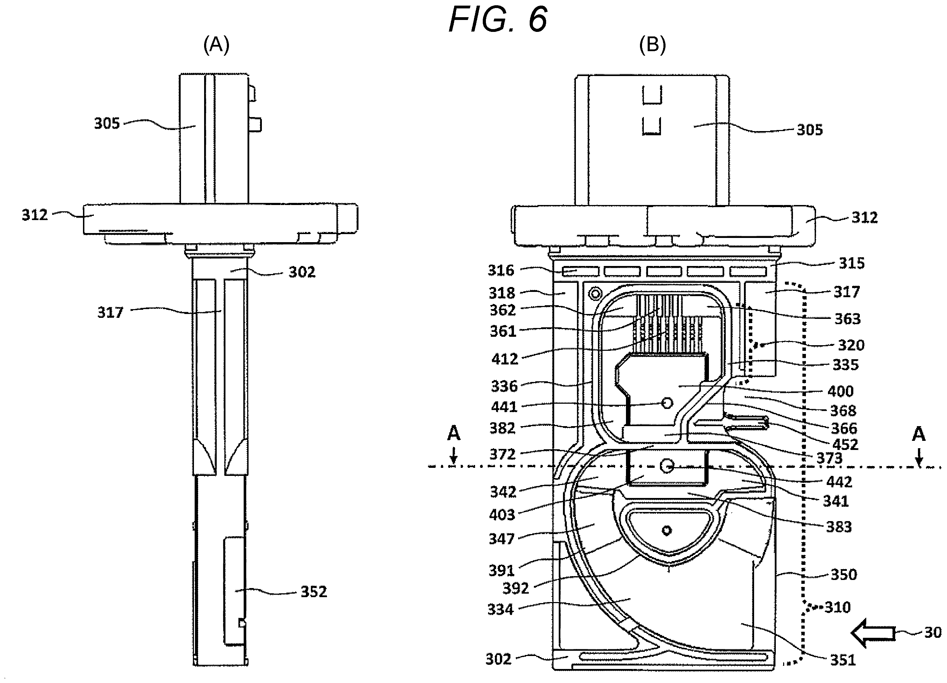

FIGS. 5(A), 5(B), 6(A), and 6(B) illustrate a state of the housing 302 when the front and rear covers 303 and 304 are removed from the thermal flow meter 300. FIG. 5(A) is a left side view illustrating the housing 302, FIG. 5(B) is a front view illustrating the housing 302, FIG. 6(A) is a right side view illustrating the housing 302, and FIG. 6(B) is a rear view illustrating the housing 302. In the housing 302, the measuring portion 310 extends from the flange 312 to the center direction of the main passage 124, and an auxiliary passage trench for forming the auxiliary passage is provided in its leading end side. In this embodiment, the auxiliary passage trench is provided on both front and rear surfaces of the housing 302. FIG. 5(B) illustrates a front auxiliary passage trench 332, and FIG. 6(B) illustrates a rear auxiliary passage trench 334. Since an inlet trench 351 for forming the inlet port 350 of the auxiliary passage and an outlet trench 353 for forming the outlet port 352 are provided in the leading end of the housing 302, the gas distant from the inner wall surface of the main passage 124, that is, the gas flow through the vicinity of the center of the main passage 124 can be received as the measurement target gas 30 from the inlet port 350. The gas flowing through the vicinity of the inner wall surface of the main passage 124 is influenced by the temperature of the wall surface of the main passage 124 and has a temperature different from the average temperature of the gas flowing through the main passage 124 such as the intake air in many cases. In addition, the gas flowing through the vicinity of the inner wall surface of the main passage 124 has a flow velocity lower than the average flow velocity of the gas flowing through the main passage 124 in many cases. Since the thermal flow meter 300 according to the embodiment is resistant to such influence, it is possible to suppress a decrease of the measurement accuracy.

The auxiliary passage formed by the front auxiliary passage trench 332 or the rear auxiliary passage trench 334 described above is connected to the thermal insulator 315 through the outer wall hollow portion 366, the upstream-side outer wall 335, or the downstream-side outer wall 336. In addition, the upstream-side outer wall 335 is provided with the upstream-side protrusion 317, and the downstream-side outer wall 336 is provided with the downstream-side protrusion 318. In this structure, since the thermal flow meter 300 is fixed to the main passage 124 using the flange 312, the measuring portion 310 having the circuit package 400 is fixed to the main passage 124 with high reliability.

In this embodiment, the housing 302 is provided with the auxiliary passage trench for forming the auxiliary passage, and the covers are installed on the front and rear surfaces of the housing 302, so that the auxiliary passage is formed by the auxiliary passage trench and the covers. In this structure, it is possible to form overall auxiliary passage trenches as a part of the housing 302 in the resin molding process of the housing 302. In addition, since the molds are provided in both surfaces of the housing 302 during formation of the housing 302, it is possible to form both the front and rear auxiliary passage trenches 332 and 334 as a part of the housing 302 by using the molds for both the surfaces. Since the front and rear covers 303 and 304 are provided in both the surfaces of the housing 302, it is possible to obtain the auxiliary passages in both surfaces of the housing 302. Since the front and rear auxiliary passage trenches 332 and 334 are formed on both the surfaces of the housing 302 using the molds, it is possible to form the auxiliary passage with high accuracy and obtain high productivity.

Referring to FIG. 6(B), a part of the measurement target gas 30 flowing through the main passage 124 is input to the inside of the rear auxiliary passage trench 334 from the inlet trench 351 that forms the inlet port 350 and flows through the inside of the rear auxiliary passage trench 334. The rear auxiliary passage trench 334 gradually deepens as the gas flows, and the measurement target gas 30 slowly moves to the front direction as it flows along the trench. In particular, the rear auxiliary passage trench 334 is provided with a steep slope portion 347 that steeply deepens to the upstream portion 342 of the circuit package 400, so that a part of the air having a light mass moves along the steep slope portion 347 and then flows through the side of the measurement passage surface 430 illustrated in FIG. 5(B) in the upstream portion 342 of the circuit package 400. Meanwhile, since a foreign object having a heavy mass has difficulty in steeply changing its path due to an inertial force, it moves to the side of the measurement passage rear surface 431 illustrated in FIG. 6(B). Then, the foreign object flows to the measurement passage surface 430 illustrated in FIG. 5(B) through the downstream portion 341 of the circuit package 400.

In this embodiment, the flow path including the rear auxiliary passage trench 334 is directed to the flange from the leading end of the housing 302 along a curved line, and the gas flowing through the auxiliary passage in the side closest to the flange flows reversely to the flow of the main passage 124, so that the auxiliary passage in the rear surface side as one side of this reverse flow is connected to the auxiliary passage formed in the front surface side as the other side. As a result, it is possible to easily fix the heat transfer surface exposing portion 436 of the circuit package 400 to the auxiliary passage and easily receive the measurement target gas 30 in the position close to the center of the main passage 124.

In this embodiment, there is provided a configuration in which the rear auxiliary passage trench 334 and the front auxiliary passage trench 332 are penetrated in the front and rear sides of the flow direction of the measurement passage surface 430 for measuring the flow rate. Meanwhile, the leading end side of the circuit package 400 is not supported by the housing 302, but has a cavity portion 382 such that the space of the upstream portion 342 of the circuit package 400 is connected to the space of the downstream portion 341 of the circuit package 400. Using the configuration penetrating the upstream portion 342 of the circuit package 400 and the downstream portion 341 of the circuit package 400, the auxiliary passage is formed such that the measurement target gas 30 moves from the rear auxiliary passage trench 334 formed in one surface of the housing 302 to the front auxiliary passage trench 332 formed in the other surface of the housing 302. In this configuration, it is possible to form the auxiliary passage trench on both surfaces of the housing 302 through a single resin molding process and perform molding with a structure for matching the auxiliary passage trenches on both surfaces.

By clamping both sides of the measurement passage surface 430 formed in the circuit package 400 using a mold to form the housing 302, it is possible to form the configuration penetrating the upstream portion 342 of the circuit package 400 and the downstream portion 341 of the circuit package 400, perform resin molding for the housing 302, and embed the circuit package 400 in the housing 302. Since the housing 302 is formed by inserting the circuit package 400 into the mold in this manner, it is possible to embed the circuit package 400 and the heat transfer surface exposing portion 436 to the auxiliary passage with high accuracy.

In this embodiment, a configuration penetrating the upstream portion 342 of the circuit package 400 and the downstream portion 341 of the circuit package 400 is provided. However, a configuration penetrating any one of the upstream portion 342 and the downstream portion 341 of the circuit package 400 may also be provided, and the auxiliary passage shape that links the rear auxiliary passage trench 334 and the front auxiliary passage trench 332 may be formed through a single resin molding process.

A rear auxiliary passage inner circumferential wall 391 and a rear auxiliary passage outer circumferential wall 392 are provided in both sides of the rear auxiliary passage trench 334, and the inner side surface of the rear cover 304 abuts on the leading end portions of the height direction of each of the rear auxiliary passage inner circumferential wall 391 and the rear auxiliary passage outer circumferential wall 392, so that the rear auxiliary passage is formed in the housing 302. In addition, a front auxiliary passage inner circumferential wall 393 and a front auxiliary passage outer circumferential wall 394 are provided in both sides of the front auxiliary passage trench 332, and the inner side surface of the front cover 303 abuts on the leading end portions of the height direction of the front auxiliary passage inner circumferential wall 393 and the front auxiliary passage outer circumferential wall 394, so that the front auxiliary passage is formed in the housing 302.

In this embodiment, the measurement target gas 30 is divided to flow through the measurement passage surface 430 and its rear surface, and the heat transfer surface exposing portion 436 for measuring the flow rate is provided in one of them. However, the measurement target gas 30 may pass through only the front surface side of the measurement passage surface 430 instead of dividing the measurement target gas 30 into two passages. By curving the auxiliary passage to follow a second axis across a first axis of the flow direction of the main passage 124, it is possible to gather a foreign object mixed in the measurement target gas 30 to the side where the curve of the second axis is insignificant. By providing the measurement passage surface 430 and the heat transfer surface exposing portion 436 in the side where the curve of the second axis is significant, it is possible to reduce influence of a foreign object.

In this embodiment, the measurement passage surface 430 and the heat transfer surface exposing portion 436 are provided in a link portion between the front auxiliary passage trench 332 and the rear auxiliary passage trench 334. However, the measurement passage surface 430 and the heat transfer surface exposing portion 436 may be provided in the front auxiliary passage trench 332 or the rear auxiliary passage trench 334 instead of the link portion between the front auxiliary passage trench 332 and the rear auxiliary passage trench 334.

Referring to FIGS. 5(A), 5(B), 6(A), and 6(B), an outer wall hollow portion 366 is provided, where the upstream-side outer wall 335 has a hollow shape hollowed to the downstream side in a base portion of the temperature detecting portion 452. Due to this outer wall hollow portion 366, a distance between the temperature detecting portion 452 and the outer wall hollow portion 366 increases, so that it is possible to reduce influence of the heat transferred via the upstream-side outer wall 335.

3.2 Shapes and Effects of Front and Rear Covers 303 and 304

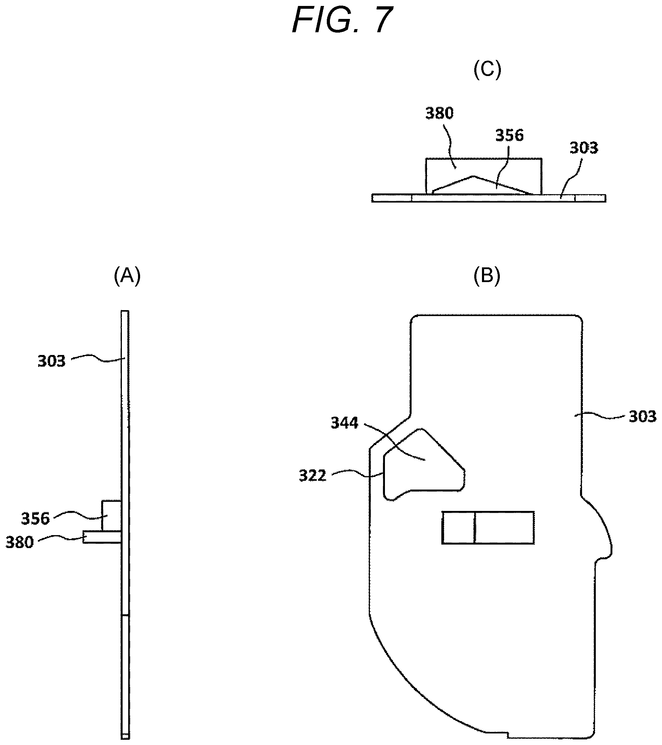

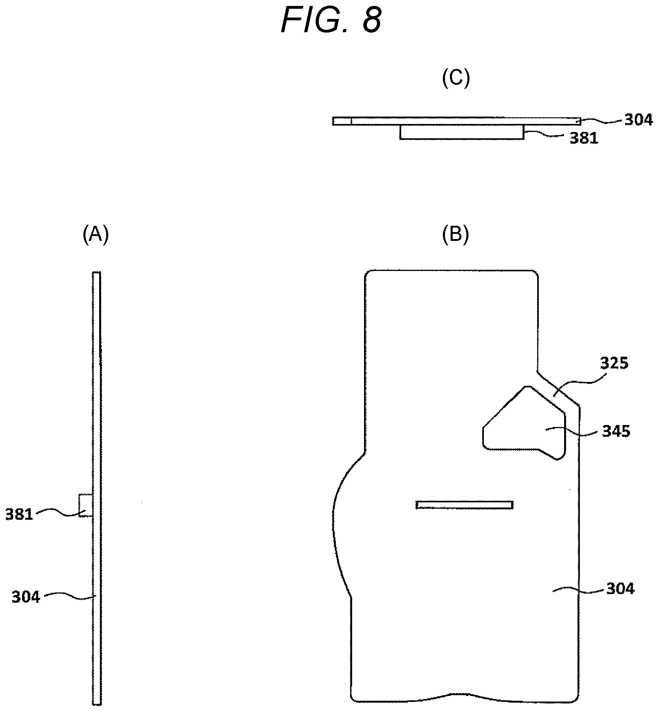

FIGS. 7(A) to 7(C) are a diagram illustrating an appearance of the front cover 303, in which FIG. 7(A) is a left side view, FIG. 7(B) is a front view, and FIG. 7(C) is a plan view. FIGS. 8(A) to 8(C) are diagrams illustrating an appearance of the rear cover 304, in which FIG. 8(A) is a left side view, FIG. 8(B) is a front view, and FIG. 8(C) is a plan view. In FIGS. 7(A) to 7(C) and 8(A) to 8(C), the front and rear covers 303 or 304 are used to form the auxiliary passage by covering the auxiliary passage trench of the housing 302. In addition, the front or rear cover 303 or 304 is used to provide an orifice in the flow path in association with the protrusion 356. For this reason, it is preferable to increase formation accuracy. Since the front or rear cover 303 or 304 is formed through a resin molding process by injecting a thermoplastic resin into a mold, it is possible to form the front or rear cover 303 or 304 with high formation accuracy. In addition, the front and rear cover 303 or 304 are provided with protrusions 380 and 381 and are configured to bury a cavity of the cavity portion 382 of the leading end side of the circuit package 400 illustrated in FIGS. 5(B) and 6(B) and cover the leading end portion of the circuit package 400 when the protrusions 380 and 381 are fit to the housing 302.

The front protection portion 322 or the rear protection portion 325 is formed in the front or rear cover 303 or 304 illustrated in FIGS. 7(A) to 7(C) and 8(A) to 8(C). As illustrated in FIG. 2(A), 2(B), 3(A), or 3(B), the front protection portion 322 provided in the front cover 303 is arranged on the front side surface of the inlet port 343, and the rear protection portion 325 provided in the rear cover 304 is arranged in the rear side surface of the inlet port 343. The temperature detecting portion 452 arranged inside the inlet port 343 is protected by the front protection portion 322 and the rear protection portion 325, so that it is possible to prevent a mechanical damage of the temperature detecting portion 452 caused when the temperature detecting portion 452 collides with something during production or loading on a vehicle.

The inner side surface of the front cover 303 is provided with the protrusion 356, and the protrusion 356 is arranged to face the measurement passage surface 430 and has a shape extending along an axis of the flow path of the auxiliary passage. A cross-sectional shape of the protrusion 356 may be inclined to the downstream side with respect to a top of the protrusion. An orifice is formed in the flow path 386 described above using the measurement passage surface 430 and the protrusion 356 so as to reduce a vortex generated in the measurement target gas 30 and generate a laminar flow. In this embodiment, the auxiliary passage having the orifice portion is divided into a trench portion and a lid portion that covers the trench to form a flow path having an orifice, and the trench portion is formed through a second resin molding process for forming the housing 302. Then, the front cover 303 having the protrusion 356 is formed through another resin molding process, and the trench is covered by using the front cover 303 as a lid of the trench to form the auxiliary passage. In the second resin molding process for forming the housing 302, the circuit package 400 having the measurement passage surface 430 is also fixed to the housing 302. The trench having a complicated shape is formed through a resin molding process, and a protrusion 356 for the orifice is provided in the front cover 303, which allows the flow path 386 to be formed with high accuracy. In addition, since an arrangement relationship between the trench and the measurement passage surface 430 or the heat transfer surface exposing portion 436 can be maintained with high accuracy, it is possible to reduce a variation of the product and as a result obtain a high measurement result. Therefore, it is possible to improve productivity.

This is similarly applied to formation of the flow path 387 using the rear cover 304 and the measurement passage rear surface 431. The flow path 387 is divided into a trench portion and a lid portion. The trench portion is formed through a second resin molding process that forms the housing 302, and the rear cover 304 cover the trench, so as to form the flow path 387. If the flow path 387 is formed in this manner, it is possible to form the flow path 387 with high accuracy and improve productivity.

3.3 Structure for Fixing Circuit Package 400 Using Housing 302 and Effects Thereof

Next, fixation of the circuit package 400 to the housing 302 through a resin molding process will be described again with reference to FIGS. 5(A), 5(B), 6(A), and 6(B). The circuit package 400 is arranged in and fixed to the housing 302 such that the measurement passage surface 430 formed on the front surface of the circuit package 400 is arranged in a predetermined position of the auxiliary passage trench auxiliary for forming the auxiliary passage, for example, a link portion between the front auxiliary passage trench 332 and the rear auxiliary passage trench 334 in the embodiment of FIGS. 5(A), 5(B), 6(A), and 6(B). A portion for burying and fixing the circuit package 400 into the housing 302 through a resin molding is provided as a fixing portion 372 for burying and fixing the circuit package 400 into the housing 302 in the side slightly closer to the flange 312 from the auxiliary passage trench. The fixing portion 372 is buried so as to cover the outer circumference of the circuit package 400 formed through the first resin molding process.

As illustrated in FIG. 5(B), the circuit package 400 is fixed by the fixing portion 372. The fixing portion 372 includes a circuit package 400 using a plane having a height adjoining the front cover 303 and a thin portion 376. By making a resin that covers a portion corresponding to the portion 376 thin, it is possible to alleviate contraction caused when a temperature of the resin is cooled during formation of the fixing portion 372 and reduce a stress concentration applied to the circuit package 400. It is possible to obtain better effects if the rear side of the circuit package 400 is formed in the shape described above as illustrated in FIG. 6(B).

The entire surface of the circuit package 400 is not covered by a resin used to form the housing 302, but a portion where the outer wall of the circuit package 400 is exposed is provided in the flange 312 side of the fixing portion 372. In the embodiment of FIGS. 5(A), 5(B), 6(A), and 6(B), the area of a portion exposed from the resin of the housing 302 but not enveloped by the housing 302 is larger than the area of a portion enveloped by the resin of the housing 302 out of the outer circumferential surface of the circuit package 400. Furthermore, a portion of the measurement passage surface 430 of the circuit package 400 is also exposed from the resin of the housing 302.

Since the circumference of the circuit package 400 is enveloped in the second resin molding process for forming the housing 302 by forming a part of the fixing portion 372 that covers the outer wall of the circuit package 400 across the entire circumference in a thin band shape, it is possible to alleviate an excessive stress concentration caused by volume contraction in the course of solidification of the fixing portion 372. The excessive stress concentration may adversely affect the circuit package 400.

A cavity is formed between the circuit package 400 and the flange 312, and this cavity portion serves as a terminal connector 320. The connection terminal 412 of the circuit package 400 and the external terminal inner contact 361 positioned in the housing 302 side of the external terminal 306 are electrically connected to each other using this terminal connector 320 through spot welding, laser welding, and the like. The cavity of the terminal connector 320 can suppress heat transfer from the housing 302 to the circuit package 400 as described above and is provided as a space that can be used to perform a connection work between the connection terminal 412 of the circuit package 400 and the external terminal inner contact 361 of the external terminal 306.

## 4. Appearance of Circuit Package 400

### 4.1 Formation of Measurement Passage Surface 430 Having Heat Transfer Surface Exposing Portion 436

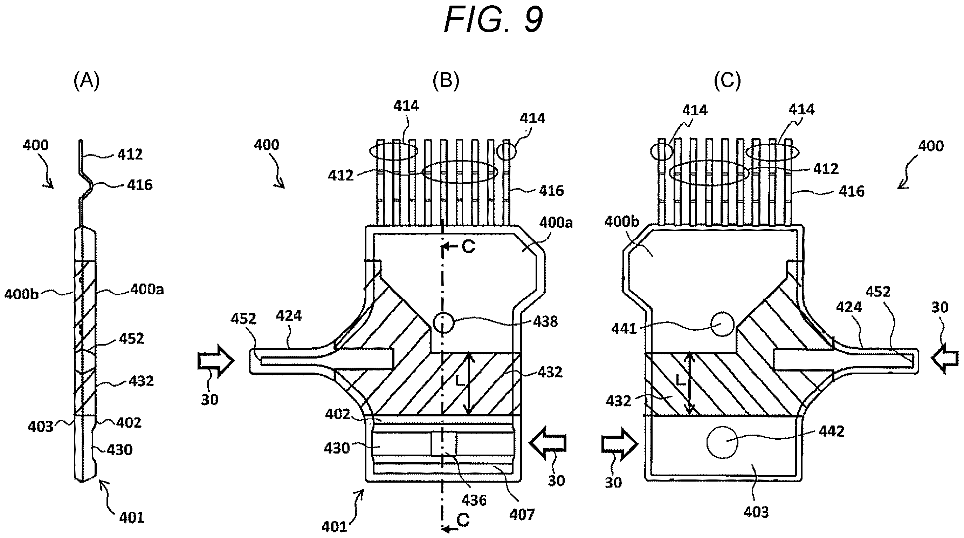

FIGS. 9(A) and 9(B) illustrate an appearance of the circuit package 400 formed through the first resin molding process. It is noted that the hatching portion in the appearance of the circuit package 400 indicates a fixation surface 432 where the circuit package 400 is covered by the resin used in the second resin molding process when the housing 302 is formed through the second resin molding process after the circuit package 400 is manufactured through the first resin molding process. FIG. 9(A) is a left side view illustrating the circuit package 400, FIG. 9(B) is a front view illustrating the circuit package 400, and the FIG. 9(C) is a rear view illustrating the circuit package 400. The circuit package 400 is embedded with the flow rate detecting portion 602 or the processing unit 604 described below, and they are integrally molded using a thermosetting resin.

On the surface of the circuit package 400 of FIG. 9(B), the measurement passage surface 430 serving as a plane for flowing the measurement target gas 30 is formed in a shape extending in a flow direction of the measurement target gas 30. In this embodiment, the measurement passage surface 430 has a rectangular shape extending in the flow direction of the measurement target gas 30. The measurement passage surface 430 is formed to be thinner than other portions as illustrated in FIG. 9(A), and a part thereof is provided with the heat transfer surface exposing portion 436. The embedded flow rate detecting portion 602 performs heat transfer to the measurement target gas 30 through the heat transfer surface exposing portion 436 to measure a condition of the measurement target gas 30 such as a flow velocity of the measurement target gas 30 and output an electric signal representing the flow rate of the main passage 124.

In order to measure a condition of the measurement target gas 30 with high accuracy using the embedded flow rate detecting portion 602 (refer to FIG. 11), the gas flowing through the vicinity of the heat transfer surface exposing portion 436 preferably makes a laminar flow having a little vortex. For this reason, it is preferable that there be no height difference between the flow path side surface of the heat transfer surface exposing portion 436 and the plane of the measurement passage surface 430 that guides the gas. In this configuration, it is possible to suppress an irregular stress or a distortion from being applied to the flow rate detecting portion 602 while maintaining high flow rate measurement accuracy. It is noted that the aforementioned height difference may be provided if it does not affect the flow rate measurement accuracy.

On the rear surface of the measurement passage surface 430 of the heat transfer surface exposing portion 436, a press imprint 442 of the mold that supports an internal substrate or plate during the resin molding of the circuit package 400 remains as illustrated in FIG. 9(C). The heat transfer surface exposing portion 436 is used to perform heat exchange with the measurement target gas 30. In order to accurately measure a condition of the measurement target gas 30, it is preferable to appropriately perform heat transfer between the flow rate detecting portion 602 and the measurement target gas 30. For this reason, it is necessary to avoid a part of the heat transfer surface exposing portion 436 from being covered by the resin in the first resin molding process. Molds are installed in both the heat transfer surface exposing portion 436 and the measurement passage rear surface 431 as a rear surface thereof, and an inflow of the resin to the heat transfer surface exposing portion 436 is prevented using this mold. A press imprint 442 having a concave shape is formed on the rear surface of the heat transfer surface exposing portion 436. In this portion, it is preferable to arrange a device serving as the flow rate detecting portion 602 or the like in the vicinity to discharge the heat generated from the device to the outside as much as possible. The formed concave portion is less influenced by the resin and easily discharges heat.

A semiconductor diaphragm corresponding to the heat transfer surface exposing portion 436 is formed in a flow rate detecting portion (flow rate detecting element) 602 including a semiconductor device. The semiconductor diaphragm can be obtained by forming a cavity on the rear surface of the flow rate detecting element 602. If the cavity is covered, the semiconductor diaphragm is deformed, and the measurement accuracy is degraded due to a change of the pressure inside the cavity caused by a change of the temperature. For this reason, in this embodiment, an opening 438 communicating with the cavity of the rear surface of the semiconductor diaphragm is provided on the front surface of the circuit package 400, and a link channel for linking the cavity of the rear surface of the semiconductor diaphragm and the opening 438 is provided inside the circuit package 400. It is noted that the opening 438 is provided in the portion not hatched in FIGS. 9(A) to 9(C) in order to prevent the opening 438 from being covered by the resin through the second resin molding process.

It is necessary to form the opening 438 through the first resin molding process while an inflow of the resin to the portion of the opening 438 is suppressed by matching molds to both a portion of the opening 438 and a rear surface thereof and pressing the molds.

4.2 Formation of Temperature Detecting Portion 452 and Protrusion 424 and Effects Thereof

The temperature detecting portion 452 provided in the circuit package 400 is also provided in the leading end of the protrusion 424 extending in the upstream direction of the measurement target gas 30 in order to support the temperature detecting portion 452 and also has a function of detecting a temperature of the measurement target gas 30. In order to detect a temperature of the measurement target gas 30 with high accuracy, it is preferable to reduce heat transfer to portions other than the measurement target gas 30 as much as possible. The protrusion 424 that supports the temperature detecting portion 452 has a shape having a leading end thinner than the base thereof and is provided with the temperature detecting portion 452 in its leading end portion. Because of such a shape, it is possible to reduce influence of the heat from the base portion of the protrusion 424 to the temperature detecting portion 452.

After the temperature of the measurement target gas 30 is detected using the temperature detecting portion 452, the measurement target gas 30 flows along the protrusion 424 to approximate the temperature of the protrusion 424 to the temperature of the measurement target gas 30. As a result, it is possible to suppress influence of the temperature of the base portion of the protrusion 424 to the temperature detecting portion 452. In particular, in this embodiment, the temperature detecting portion 452 is thinner in the vicinity of the protrusion 424 having the temperature detecting portion 452 and is thickened toward the base portion of the protrusion. For this reason, the measurement target gas 30 flows along the shape of the protrusion 424 to efficiently cool the protrusion 424.

The hatching portion of the base portion of the protrusion 424 is a fixation surface 432 covered by the resin used to form the housing 302 in the second resin molding process. A hollow is provided in the hatching portion of the base portion of the protrusion 424. This shows that a portion of the hollow shape not covered by the resin of the housing 302 is provided. If such a portion having a hollow shape not covered by the resin of the housing 302 in the base portion of the protrusion 424 is provided in this manner, it is possible to further easily cool the protrusion 424 using the measurement target gas 30.

4.3 Terminal of Circuit Package 400

The circuit package 400 is provided with the connection terminal 412 in order to supply electric power for operating the embedded flow rate detecting portion 602 or the processing unit 604 and output the flow rate measurement value or the temperature measurement value. In addition, a terminal 414 is provided in order to inspect whether or not the circuit package 400 is appropriately operated, or whether or not an abnormality is generated in a circuit component or connection thereof. In this embodiment, the circuit package 400 is formed by performing transfer molding for the flow rate detecting portion 602 or the processing unit 604 using a thermosetting resin through the first resin molding process. By performing the transfer molding, it is possible to improve dimensional accuracy of the circuit package 400. However, in the transfer molding process, since a high pressure resin is pressed into the inside of the sealed mold where the flow rate detecting portion 602 or the processing unit 604 is embedded, it is preferable to inspect whether or not there is a defect in the flow rate detecting portion 602 or the processing unit 604 and such a wiring relationship for the obtained circuit package 400. In this embodiment, an inspection terminal 414 is provided, and inspection is performed for each of the produced circuit packages 400. Since the inspection terminal 414 is not used for measurement, the terminal 414 is not connected to the external terminal inner contact 361 as described above. In addition, each connection terminal 412 is provided with a curved portion 416 in order to increase a mechanical elastic force. If a mechanical elastic force is provided in each connection terminal 412, it is possible to absorb a stress caused by a difference of the thermal expansion coefficient between the resin of the first resin molding process and the resin of the second resin molding process. That is, each connection terminal 412 is influenced by thermal expansion caused by the first resin molding process, and the external terminal inner contact 361 connected to each connection terminal 412 are influenced by the resin of the second resin molding process. Therefore, it is possible to absorb generation of a stress caused by the difference of the resin.

4.4 Fixation of Circuit Package 400 through Second Resin Molding Process and Effects Thereof

In FIGS. 9(A) to 9(C), the hatching portion indicates a fixation surface 432 for covering the circuit package 400 using the thermoplastic resin used in the second resin molding process to fix the circuit package 400 to the housing 302 in the second resin molding process. As described above in relation to FIG. 5(A), 5(B), 6(A), or 6(B), it is important to maintain high accuracy to provide a specific relationship between the measurement passage surface 430, the heat transfer surface exposing portion 436 provided in the measurement passage surface 430, and the shape of the auxiliary passage. In the second resin molding process, the auxiliary passage is formed, and the circuit package 400 is fixed to the housing 302 that forms the auxiliary passage. Therefore, it is possible to maintain a relationship between the auxiliary passage, the measurement passage surface 430, and the heat transfer surface exposing portion 436 with significantly high accuracy. That is, since the circuit package 400 is fixed to the housing 302 in the second resin molding process, it is possible to position and fix the circuit package 400 into the mold used to form the housing 302 having the auxiliary passage with high accuracy. By injecting a thermoplastic resin having a high temperature into this mold, the auxiliary passage is formed with high accuracy, and the circuit package 400 is fixed with high accuracy.

In this embodiment, the entire surface of the circuit package 400 is not a fixation surface 432 covered by the resin used to form the housing 302, but the front surface is exposed to the connection terminal 412 side of the circuit package 400. That is, a portion not covered by the resin used to form the housing 302 is provided. In the embodiment illustrated in FIGS. 9(A) to 9(C), out of the front surface of the circuit package 400, the area that is not enveloped by the resin used to form the housing 302 but is exposed from the resin used to form the housing 302 is larger than the area of the fixation surface 432 enveloped by the resin used to form the housing 302.

A thermal expansion coefficient is different between the thermosetting resin used to form the circuit package 400 and the thermoplastic resin used to form the housing 302 having the fixing portion 372. It is preferable to prevent a stress caused by this difference of the thermal expansion coefficient from being applied to the circuit package 400 as long as possible. By reducing the front surface of the circuit package 400 and the fixation surface 432, it is possible to reduce influence based on the difference of the thermal expansion coefficient. For example, it is possible to reduce the fixation surface 432 on the front surface of the circuit package 400 by providing a band shape having a width L.

It is possible to increase a mechanical strength of the protrusion 424 by providing the fixation surface 432 in the base of the protrusion 424. It is possible to more robustly fix the circuit package 400 and the housing 302 to each other by providing, on the front surface of the circuit package 400, a band-shaped fixation surface along a flow axis of the measurement target gas 30 and a fixation surface across the flow axis of the measurement target gas 30. On the fixation surface 432, a portion surrounding the circuit package 400 in a band shape having a width L along the measurement passage surface 430 is the fixation surface along the flow axis of the measurement target gas 30 described above, and a portion that covers the base of the protrusion 424 is the fixation surface across the flow axis of the measurement target gas 30.

5. Circuit Configuration of Thermal Flow Meter 300

5.1 Entire Circuit Configuration of Thermal Flow Meter 300

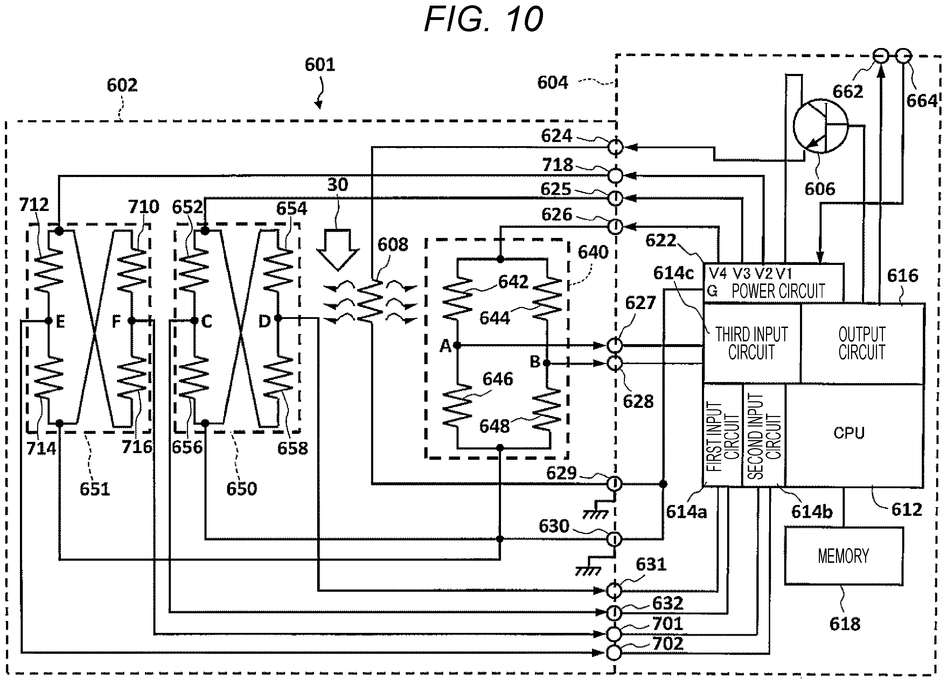

FIG. 10 is a circuit diagram illustrating the flow rate detection circuit 601 of the thermal flow meter 300. It is noted that the measurement circuit relating to the temperature detecting portion 452 described in the aforementioned embodiment is also provided in the thermal flow meter 300, but is not illustrated intentionally in FIG. 10.

The flow rate detection circuit 601 of the thermal flow meter 300 includes the flow rate detecting portion 602 having a heat generator 608 and the processing unit 604. The processing unit 604 control a heat generation amount of the heat generator 608 of the flow rate detecting portion 602 and outputs a signal representing the flow rate through the terminal 662 based on the output of the flow rate detecting portion 602. For this processing, the processing unit 604 includes a central processing unit (hereinafter, referred to as "CPU") 612, first, second, and third input circuits 614a, 614b, and 614c, an output circuit 616, a memory 618 for storing data representing a relationship between the calibration value or the measurement value and the flow rate, and a power circuit 622 for supplying given voltages V1, V2, V3, and V4 to necessary circuits. The power circuit 622 is supplied with DC power from an external power supply such as a vehicle-mount battery through a terminal 664 and a ground terminal (not illustrated).

The flow rate detecting portion 602 is provided with the heat generator 608 for heating the measurement target gas 30. The given voltage V1 is supplied from the power circuit 622 to a collector of a transistor 606 included in a current supply circuit of the heat generator 608, and a control signal is applied from the CPU 612 to a base of the transistor 606 through the output circuit 616. Based on this control signal, a current is supplied from the transistor 606 to the heat generator 608 through the terminal 624. The current amount supplied to the heat generator 608 is controlled by a control signal applied from the CPU 612 to the transistor 606 of the current supply circuit of the heat generator 608 through the output circuit 616. The processing unit 604 controls the heat generation amount of the heat generator 608 such that a temperature of the measurement target gas 30 increases by a predetermined temperature, for example, 100°C from an initial temperature by heating using the heat generator 608.

The flow rate detecting portion 602 includes a heating control bridge 640 and two flow rate sensing bridges 650 and 651 (a first flow rate sensing bridge and a second flow rate sensing bridge). The given voltage V4 is supplied to one end of the heating control bridge 640 from the power circuit 622 through the terminal 626, and the other end of the heating control bridge 640 is connected to the ground terminal 630. The given voltage V3 is applied to one end of the first flow rate sensing bridge circuit 650 from the power circuit 622 through the terminal 625, and the other end of the first flow rate sensing bridge circuit 650 is connected to the ground terminal 630. The given voltage V2 is applied to one end of the second flow rate sensing bridge circuit 651 the second flow rate sensing bridge circuit 651 from the power circuit 622 through a terminal 718, and the other end of the second flow rate sensing bridge circuit 651 is connected to the ground terminal 630.

The heating control bridge 640 is used to control the heat generation amount of the heat generator 608, and includes a resistor 642 which is a resistance thermometer bulb having a resistance value changing depending on the temperature of the heated measurement target gas 30, and the resistors 642, 644, 646, and 648 constitute a bridge circuit. A potential at a node A between the resistors 642 and 646 and a potential at a node B between the resistors 644 and 648 are input to the third input circuit 614c through the terminals 627 and 628. CPU 612 controls the current supplied from the transistor 606 such that a potential difference between the nodes A and B becomes a predetermined value, namely, zero volt in this embodiment, thereby controlling the heat generation amount of the heat generator 608.

The flow rate detection circuit 601 illustrated in FIG. 10 heats the measurement target gas 30 using the heat generator 608 such that a temperature increases by a predetermined temperature, for example, 100°C from an initial temperature of the measurement target gas 30 at all times. In order to perform this heating control with high accuracy, resistance values of each resistor of the heating control bridge 640 are set such that the potential difference between the nodes A and B becomes zero when the temperature of the measurement target gas 30 warmed by the heat generator 608 increases by a predetermined temperature, for example, 100°C from an initial temperature at all times. Therefore, in the flow rate detection circuit 601 of FIG. 10, the CPU 612 controls the electric current supplied to the heat generator 608 such that the potential difference between the nodes A and B becomes zero.

The first flow rate sensing bridge circuit 650 includes four resistance thermometer bulbs of resistors 652, 654, 656, and 658. The four resistance thermometer bulbs are arranged along the flow of the measurement target gas 30 such that the resistors 652 and 654 (first upstream resistance thermometer bulb) are arranged in the upstream side in the flow path of the measurement target gas 30 with respect to the heat generator 608, and the resistors 656 and 658 (first downstream resistance thermometer bulb) are arranged on the downstream side in the flow path of the measurement target gas 30 with respect to the heat generator 608. In order to increase the measurement accuracy, the resistors 652 and 654 on the upstream side are arranged in a direction intersecting a flow direction of the measurement target gas 30 such that distances to the heat generator 608 become substantially equal to each other, and the resistors 656 and 658 on the downstream side are arranged in the direction intersecting the flow direction of the measurement target gas 30 such that the distances to the heat generator 608 become substantially equal to each other (refer to FIG. 11).

The second flow rate sensing bridge circuit 651 includes four resistance thermometer bulbs of resistors 712, 716, 710, and 714. The four resistance thermometer bulbs are arranged along the flow of the measurement target gas 30 such that the resistors 712 and 714 (second upstream resistance thermometer bulb) are arranged in the upstream side in the flow path of the measurement target gas 30 with respect to the heat generator 608, and the resistors 714 and 716 (second downstream resistance thermometer bulb) are arranged on the downstream side in the flow path of the measurement target gas 30 with respect to the heat generator 608.

The resistors 712, 716, 710, and 714 are arranged on the upstream or downstream sides in the flow path of the measurement target gas 30 with respect to the resistors 652, 654, 656, and 658 of the first flow rate sensing bridge circuit 650. In order to increase the measurement accuracy, the resistors 710 and 712 on the upstream side are arranged in the direction intersecting the flow direction of the measurement target gas 30 such that the distances to the heat generator 608 become substantially equal to each other, and the resistors 714 and 716 on the downstream side are arranged in the direction intersecting the flow direction of the measurement target gas 30 such that the distances to the heat generator 608 become substantially equal to each other (refer to FIG. 11).

In order to increase the measurement accuracy, for example, each resistance of the first flow rate sensing bridge circuit 650 is set such that the potential difference between the nodes C and D becomes zero while the flow of the measurement target gas 30 is set to zero. In order to increase the measurement accuracy, for example, each resistance of the second flow rate sensing bridge circuit 651 is set such that the potential difference between the nodes E and F becomes zero while the flow of the measurement target gas 30 is set to zero.

The potential at the node C between the resistors 652 and 656 of the first flow rate sensing bridge circuit 650 is input to the first input circuit 614a through the terminal 632. The potential at the node D between the resistors 654 and 658 of the first flow rate sensing bridge circuit 650 is input to the first input circuit 614a through the terminal 631.

Similarly, the potential at the node E between the resistors 712 and 714 of the second flow rate sensing bridge circuit 651 is input to the second input circuit 614b through the terminal 702, and the potential at the node F between the resistors 710 and 716 of the second flow rate sensing bridge circuit 651 is input to the second input circuit 614b through the terminal 701.

The CPU 612 calculates the potential difference between the nodes C and D using the potentials at the nodes C and D input to the first input circuit 614a, and calculates the potential difference between the nodes E and F using the potentials at the nodes E and F input to the second input circuit 614b. When the potential difference between the nodes C and D is in a zero-volt state, or when the potential difference between the nodes E and F is in the zero-volt state, the CPU 612 determines that the flow rate of the measurement target gas 30 is zero. Based on a measurement result, the CPU 612 outputs an electric signal indicating the flow rate of zero of the measurement target gas 30 in the main passage 124 from the terminal 662.

In the case that the measurement target gas 30 flows in the arrow direction in FIG. 10, the resistors 652 and 654 of the first flow rate sensing bridge circuit 650 and the resistors 710 and 712 of the second flow rate sensing bridge circuit 651, which are arranged on the upstream side of the heat generator 608 (the upstream temperature detecting means), are cooled by the measurement target gas 30, and the temperatures at the resistors 652, 654, 710, and 712 are lowered. On the other hand, the resistors 656 and 658 of the first flow rate sensing bridge circuit 650 and the resistors 714 and 716 of the second flow rate sensing bridge circuit 651, which are arranged on the downstream side of the heat generator 608, (the upstream temperature detecting means) are warmed by the measurement target gas 30 warmed by the heat generator 608, and the temperatures at the resistors 656, 658, 714, and 716 are raised.

For this reason, the potential difference is generated between the nodes C and D of the first flow rate sensing bridge circuit 650, and the potential difference is generated between the nodes E and F of the second flow rate sensing bridge circuit 651. The potentials at the nodes C to F are input to the first and second input circuits 614a and 614b through the terminals 631 and 632 and the terminals 701 and 702, respectively.

The CPU 612 calculates a first potential difference of the potential difference between the nodes C and D using the potentials at the nodes C and D input to the first input circuit 614a. Based on the first potential difference, the CPU 612 searches the data indicating the relationship between the potential difference and the flow rate of the measurement target gas 30, the data being stored in the memory 618, thereby obtaining a flow rate detection amount Q of the measurement target gas 30 (the flow rate calculating means). The CPU 612 may calculate a second potential difference of the potential difference between the nodes E and F using the potential at the nodes E and F input to the second input circuit 614b, and calculate the flow rate detection amount Q based on the second potential difference, or the CPU 612 may calculate an average value of the first and second potential differences, and calculate the flow rate detection amount Q based on the average value.

The data indicating a relationship between the first or second potential difference and the flow rate of the measurement target gas 30 in the main passage 124 is stored in the memory 618, and calibration data reducing a measurement error such as a variation, obtained based on the actual measurement value of the gas after production of the circuit package 400, is also stored in the memory 618. It is noted that the actual measurement value of the gas after production of the circuit package 400 and the calibration value based thereon are stored in the memory 618 using the external terminal 306 or the calibration terminal 307 illustrated in FIGS. 4(A) and 4(B). In this embodiment, the circuit package 400 is produced while an arrangement relationship between the auxiliary passage for flowing the measurement target gas 30 and the measurement passage surface 430 or an arrangement relationship between the auxiliary passage for flowing the measurement target gas 30 and the heat transfer surface exposing portion 436 is maintained with high accuracy and a little variation. Therefore, it is possible to obtain a measurement result with remarkably high accuracy through calibration using the calibration value.

The CPU 612 can obtain, instead of the first and the second potential differences, the flow rate Q of the measurement target gas 30 by searching the data indicating the relationship between the potential and the flow rate of the measurement target gas 30, the data being stored in the memory 618, based on the potentials at the nodes C and D input to the first input circuit 614a or the potentials at the nodes E and F input to the second input circuit 614b. For example, the flow rate detection amount Q can be obtained from the potential at the node C or D input to the first input circuit 614a or the average of the potentials at the nodes C and D, and the flow rate detection amount Q can be obtained from the potential at the node E or F input to the second input circuit 614b or the average of the potentials at the nodes E and F.

The CPU 612 calculates the heat capacity in the thin area of the flow rate detecting portion 602 from the difference between the first and second potential differences (the heat capacity calculating means), compares the detected heat capacity to the heat capacity at the shipment time, and estimates the thermal conductivity change amount in the thin area (the thermal conductivity change amount estimating means). The CPU 612 performs processing of calibrating the flow rate detection amount Q of the measurement target gas 30 based on the estimated thermal conductivity change amount (the calibration means).

A method for calibrating the flow rate detection amount Q of the measurement target gas 30 will be described below.

The following equation (1) is a calibration formula used to calibrate the flow rate of the measurement target gas 30.

$$Qout = Q + K \times q \quad \ldots \quad (1)$$

Qout is the calibrated flow rate, Q is the flow rate detection amount, K is a calibration factor, and q is the thermal conductivity change amount.

The flow rate detection amount Q of the measurement target gas 30 is obtained by searching the data indicating the relationship between the potential difference and the flow rate of the measurement target gas 30, the data being stored in the memory 618, based on the first potential difference. The calibration factor K can be obtained using a constant previously obtained by an experiment or by referring to a map based on the flow rate detection amount Q and the thermal conductivity change amount q. The thermal conductivity change amount q can be obtained from a difference between the difference between the first and second potential differences and the difference between the first and second potential differences at the shipment time.

The true flow rate Qout of the measurement target gas 30 is obtained by adding the flow rate detection amount Q to a value in which the thermal conductivity change amount q is multiplied by the calibration factor K. The true flow rate Qout of the measurement target gas 30 is output through the terminal 662. It is noted that, although the terminals 664 and 662 in FIG. 10 are denoted by new reference numerals, they are included in the connection terminal 412 in FIG. 5(A), 5(B), 6(A), 6(B).

The CPU 612 outputs the true flow rate Qout by performing the calibration on the flow rate detection amount Q based on the thermal conductivity change from the shipment time. For example, even if the contamination adheres to the flow rate detecting portion 608, the flow rate detection accuracy can be maintained at a high level.

Instead of calibrating the flow rate detection amount Q to output the true flow rate Qout, the CPU 612 may compare the heat capacity (the difference between the first and second potential differences) in the thin area of the flow rate detecting portion 602 to a previously-set threshold, and output a warning signal encouraging a user to exchange the thermal flow meter may when the heat capacity exceeds the threshold. Accordingly, the user can be informed that the situation in which the correct flow rate is hardly measured due to the contamination adhering to the thermal flow meter, and can promote exchange of the thermal flow meter.

5.2 Configuration of Flow Rate Detection Circuit 601

FIG. 11 is a circuit configuration diagram illustrating a circuit arrangement of the flow rate detection circuit 601 in FIG. 10. The flow rate detection circuit 601 is manufactured from a rectangular semiconductor chip (semiconductor member). The measurement target gas 30 flows along an arrow direction from the left side to the right side of the flow rate detection circuit 601 in FIG. 11.

A rectangular diaphragm 672 in which a semiconductor chip is thinned is formed in the flow rate detecting portion (flow rate detecting element) 602 manufactured from the semiconductor chip. The diaphragm 672 is provided with a thin area (that is, the heat transfer surface) 603 indicated by a broken line. The cavity is formed on the rear surface side of the thin area 603 to communicate with the opening 438 in FIGS. 9(A) to 9(C) and 5(A) and 5(B), so that the gas pressure in the cavity depends on the pressure of the gas guided from the opening 438.

By reducing the thickness of the diaphragm 672, the thermal conductivity is lowered to suppress the heat transfer to the resistors 652, 654, 658, and 656 provided in the thin area (heat transfer surface) 603 of the diaphragm 672 through the diaphragm 672, so that the temperatures of the resistors are substantially fixed through the heat transfer to the measurement target gas 30.

The heat generator 608 is provided in the center of the thin area 603 of the diaphragm 672, and the resistor 642 constituting the heating control bridge 640 is provided around the heat generator 608. The resistors 644, 646, and 648 constituting the heating control bridge 640 are provided outside the thin area 603. The resistors 642, 644, 646, and 648 formed in this manner constitute the heating control bridge 640.

The resistors 652 and 654 that are of the upstream resistance thermometer bulbs of the first flow rate sensing bridge circuit 650 and the resistors 656 and 658 that are of the downstream resistance thermometers are arranged to interpose the heat generator 608. The resistors 652 and 654 as upstream resistance thermometer bulbs are arranged in the upstream side in the arrow direction where the measurement target gas 30 flows with respect to the heat generator 608. The resistors 656 and 658 as downstream resistance thermometer bulbs are arranged in the downstream side in the arrow direction where the measurement target gas 30 flows with respect to the heat generator 608. Therefore, the first flow rate sensing bridge circuit 650 is formed by the resistors 652, 654, 656, and 658 arranged in the thin area 603.

The resistors 712 and 716 that are of the upstream resistance thermometer bulbs of the second flow rate sensing bridge circuit 651 are arranged on the upstream side of the resistors 652 and 654 that are of the upstream resistance thermometer bulbs of the first flow rate sensing bridge circuit 650 in the arrow direction in which the measurement target gas 30 flows. The resistors 710 and 714 that are of the downstream resistance thermometer bulbs of the second flow rate sensing bridge circuit 651 are arranged on the downstream side of the resistors 656 and 658 that are of the downstream resistance thermometer bulbs of the first flow rate sensing bridge circuit 650 in the arrow direction in which the measurement target gas 30 flows. Therefore, the second flow rate sensing bridge circuit 651 is formed by the resistors 712, 716, 710, and 714 arranged in the thin area 603.

Both ends of the heat generator 608 are connected to the terminals 624 and 629 in FIG. 11, respectively. At this point, as illustrated in FIG. 10, the current supplied from the transistor 606 to the heat generator 608 is applied to the terminal 624, and the terminal 629 is grounded.

The resistors 642, 644, 646, and 648 of the heating control bridge 640 are connected to each other and are connected to the terminals 626 and 630. As illustrated in FIG. 10, the terminal 626 is supplied with the given voltage V4 is supplied to the terminal 626 from the power circuit 622, and the terminal 630 is grounded. The node between the resistors 642 and 646 and the node between the resistors 646 and 648 are connected to the terminals 627 and 628, respectively. As illustrated in FIG. 11, the terminal 627 outputs the potential at the node A between the resistors 642 and 646, and the terminal 627 outputs the potential at the node B between the resistors 644 and 648.

As illustrated in FIG. 10, the given voltage V3 is supplied to the terminal 625 from the power circuit 622, and the terminal 630 is grounded. The node between the resistors 654 and 658 is connected to the terminal 631, and the terminal 631 outputs the potential at the node D in FIG. 10. The node between the resistors 652 and 656 is connected to the terminal 632, and the terminal 632 outputs the potential at the node C illustrated in FIG. 10.

The given voltage V2 is supplied to the terminal 718 from the power circuit 622, and the terminal 630 is grounded. The node between the resistors 710 and 716 is connected to the terminal 701, and the terminal 701 outputs the potential at the node F in FIG. 10. The node between the resistors 712 and 714 is connected to the terminal 702, and the terminal 702 outputs the potential at the node E in FIG. 10.

As illustrated in FIG. 11, since the resistor 642 of the heating control bridge 640 is formed in the vicinity of the heat generator 608, it is possible to measure the temperature of the gas heated by the heat from the heat generator 608 with high accuracy. Meanwhile, since the resistors 644, 646, and 648 of the heating control bridge 640 are arranged distant from the heat generator 608, they are not easily influenced by the heat generated from the heat generator 608. The resistor 642 is configured to respond sensitively to the temperature of the gas heated by the heat generator 608, and the resistors 644, 646, and 648 are configured not to be influenced by the heat generator 608. For this reason, the detection accuracy of the measurement target gas 30 using the heating control bridge 640 is high, and the control for heating the measurement target gas 30 by only a predetermined temperature from its initial temperature can be performed with high accuracy.

The resistors 652 to 658 of the first flow rate sensing bridge circuit 650 and the resistors 710 to 716 of the second flow rate sensing bridge circuit 651 are provided in the thin area (heat transfer surface) 603 of the diaphragm 672, and the resistors 712 and 710 of the second flow rate sensing bridge circuit 651 are arranged on the upstream side of the resistors 652 and 654 of the first flow rate sensing bridge circuit 650 in the flow direction of the measurement target gas 30. The resistors 716 and 714 of the second flow rate sensing bridge circuit 651 are arranged on the downstream side of the resistors 656 and 658 of the first flow rate sensing bridge circuit 650 in the flow direction of the measurement target gas 30. Accordingly, a temperature distribution (temperature difference) in the flow direction of the measurement target gas 30 in the thin area 603 of the diaphragm 672 and the upstream area of the area on the upstream side of the heat generator 608 and a temperature distribution (temperature difference) in the flow direction of the measurement target gas 30 in the downstream area of the area on the downstream side can be measured by the flow rate sensing bridges 650 and 651 (the temperature difference detecting means).

The CPU 612 detects the heat capacity in the thin area of the flow rate detecting portion 602 from the difference between the first and second potential differences, compares the detected heat capacity to the heat capacity at the shipment time, and performs processing of estimating the change amount of the thermal conductivity. The processing of calibrating the flow rate detection amount Q of the measurement target gas 30 is performed based on the estimated change amount of the thermal conductivity, and an electric signal indicating a calibrated flow rate Qout is output through the terminal 662.

Frequently the contamination is deposited on the heat transfer surface in the thin area so as to form the shading. Particularly, the contamination is subjected to the thermophoresis from the high-temperature side toward the low-temperature-side side due to the temperature gradient formed by the heat generator 608, and therefore the contamination intensively adheres to the position near the heat generator 608 in the heat transfer surface.

In the flow rate detecting portion 602 of the embodiment, the resistors 652 and 654 of the first flow rate sensing bridge circuit 650 and the resistors 712 and 710 of the second flow rate sensing bridge circuit 651 are arranged at a predetermined interval along the flow direction of the measurement target gas 30 in the thin area (heat transfer surface) 603 of the diaphragm 672 heated by the heat generator 608, a temperature distribution in the flow direction of the measurement target gas 30 in the thin area 603 and the area on the upstream side of the heat generator 608 and a temperature distribution in the flow direction of the measurement target gas 30 in the thin area 603 and the area on the downstream side of the heat generator 608 are detected.

Accordingly, in the peripheral portion of the heat generator 608, the contamination of the heat transfer surface 603 intensively adhering to the peripheral portion of the heat generator 608, the thermal conductivity change amount can be estimated by detecting the heat capacity can be estimate. The flow rate of the measurement target gas 30 passing through the main passage 124 can be measured with high accuracy by calibrating the flow rate detection amount Q of the measurement target gas 30 based on the estimated thermal conductivity.

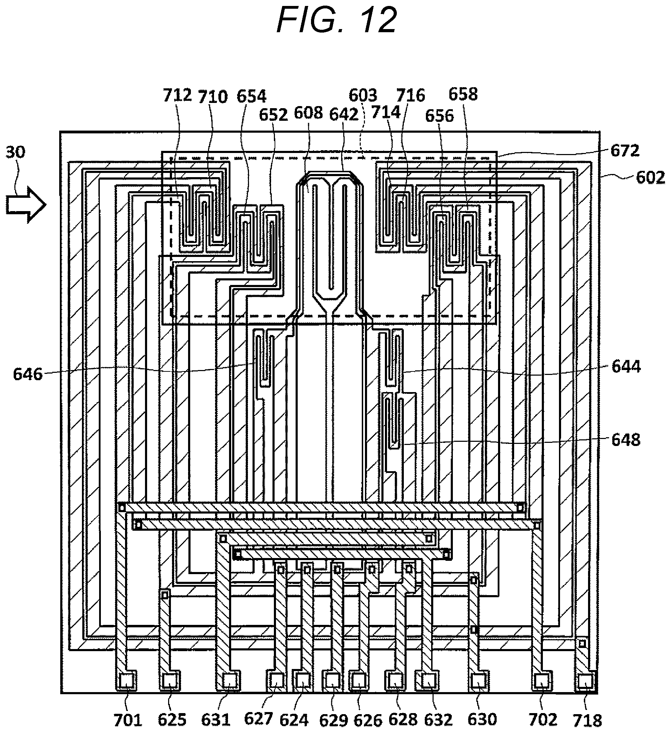

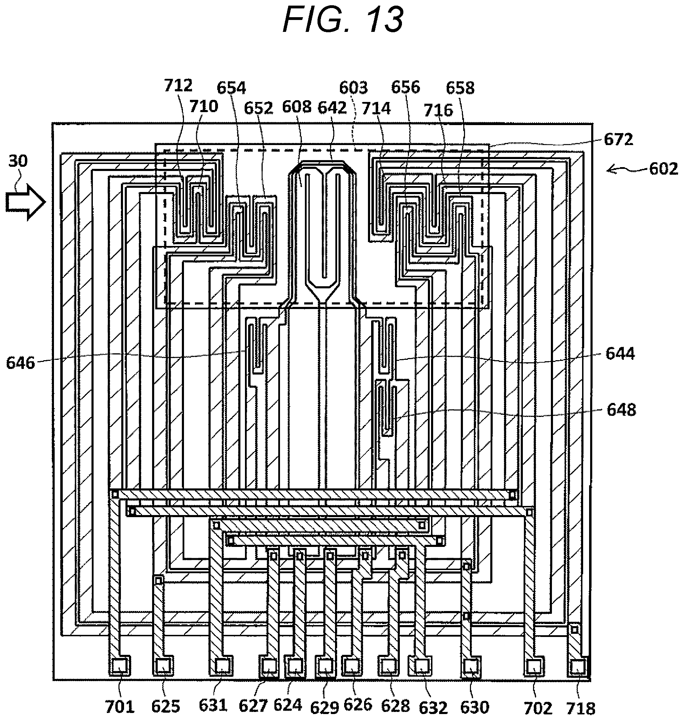

FIGS. 12 and 13 are circuit configuration diagrams illustrating other examples of the circuit arrangement of the flow rate detection circuit 601 in FIG. 10.

The example of FIG. 12 has a configuration in which the positions of the resistors 656 and 658 and resistors 710 and 714 on the downstream side of the heat generator 608 in the first and second flow rate sensing bridge circuits 650 and 651 are changed. That is, the resistors 710 and 714 of the second flow rate sensing bridge circuit 651 are arranged on the downstream side of the heat generator 608 and at the position near the heat generator 608, and the resistors 656 and 658 of the first flow rate sensing bridge circuit 650 are arranged on the downstream side of the resistors 710 and 714 of the second flow rate sensing bridge circuit 651. Even if the resistors 656 and 658 on the downstream side of the first flow rate sensing bridge circuit 650 are located on the downstream side of the resistors 710 and 714 on the downstream side of the second flow rate sensing bridge circuit 651, the temperature distribution in the flow direction of the measurement target gas 30 can be measured in the thin area 603 and on the upstream and downstream sides of the heat generator 608.

The example of FIG. 13 has a configuration in which the resistors 656, 658, 710 and 714 on the downstream side of the heat generator 608 in the first and second flow rate sensing bridge circuits 650 and 651 are alternately arranged along the flow direction of the measurement target gas 30. That is, one of the resistors 710 and 714 of the second flow rate sensing bridge circuit 651 is arranged on the downstream side of the heat generator 608 and at the position near the heat generator 608, and one of the resistors 656 and 658 of the first flow rate sensing bridge circuit 650 is arranged on the downstream side of one of the resistors 710 and 714. Additionally, the other of the resistors 710 and 714 of the second flow rate sensing bridge circuit 651 is arranged on the downstream side of one of the resistors 656 and 658, and the other of the resistors 656 and 658 of the first flow rate sensing bridge circuit 650 is arranged on the downstream side of the other of the resistors 710 and 714.

The positions of the resistors 656 and 658 on the downstream side of the first flow rate sensing bridge circuit 650 and the resistors 710 and 714 on the downstream side of the second flow rate sensing bridge circuit 651 are alternately arranged in the flow direction of the measurement target gas 30 on the downstream side of the heat generator 608. Therefore, one of the resistors 656 and 658 and the resistors 710 and 714 can be prevented from largely separating from the heat generator 608 compared with the other of the resistors 656 and 658 and the resistors 710 and 714, and the resistors 656 and 658 and the resistors 710 and 714 can be arranged at the substantially identical positions on the downstream side of the heat generator 608.

Accordingly, the temperature can correctly be measured on the downstream side of the heat generator 608, the upstream-side temperature distribution can also correctly be measured based on the downstream-side temperature, and the heat capacity can be measured with high accuracy.

In the embodiments, the two bridge circuits of the first and second flow rate sensing bridge circuits 650 and 651 are provided by way of example. Alternatively, at least three bridge circuits may be provided. In this case, the temperature distribution in the flow direction of the measurement target gas 30 can more finely be measured in the thin area 603 of the diaphragm 672 by increasing the number of bridge circuits, and the state of the contamination deposited on the thin area 603 can be estimated with higher accuracy.

By way of example, the potentials at the nodes C and D of the first flow rate sensing bridge circuit 650 are input to the first input circuit 614a, the potentials at the nodes E and F of the second flow rate sensing bridge circuit 651 are input to the second input circuit 614b, and the potentials at the nodes A and B of the heating control bridge 640 are input to the third input circuit 614c. Alternatively, six input circuits corresponding to the potentials at the nodes A to F are provided, and the potentials at the nodes A to F may be input to the input circuits.

As described above, in the diaphragm 672, the thin area 603 is formed, and the portion including the thin area 603 is extremely thinned, which allows the heat conduction through the diaphragm 672 to be suppressed as small as possible. An influence of the heat conduction through the diaphragm 672 is suppressed, and the flow rate sensing bridge circuit 650 and the heating control bridge 640 more strongly tend to operate depending on the temperature of the measurement target gas 30. Therefore, the measurement operation is improved. For this reason, the high measurement accuracy is obtained.

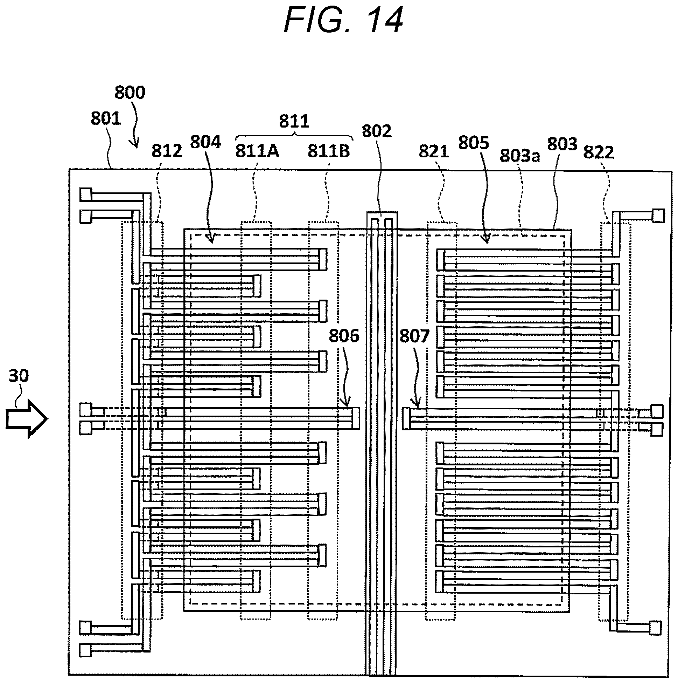

FIG. 14 is a circuit configuration diagram illustrating a flow rate detection circuit of a thermal flow meter according to an embodiment.

One of the features of the embodiment is that the flow rate and the heat capacity are detected using a thermocouple instead of the heating resistor. As illustrated in FIG. 14, the flow rate detecting portion 800 includes, on a substrate (semiconductor member) 801, a heat generator 802, sensing thermocouples 804 and 805 that measure the temperatures at the upstream and downstream positions of the heat generator 802, and monitoring thermocouples 806 and 807 that measure the temperature of the heat generator 802.

The substrate 801 includes a diaphragm 803 that is formed by thinning a center portion of the substrate 801. A size of a thin area (heat transfer surface) 803a of the diaphragm 803 is set such that upstream and downstream ends are arranged at boundaries of an area where the temperature gradient is generated by the heating of the heat generator 802, and the substrate 801 is partitioned into a measurement area on the inside of the thin area 803a and an adjustment area on the outside of the thin area 803a. The heat generator 802 extends in the direction orthogonal to the flow direction of the measurement target gas 30, and divides the thin area 803a of the diaphragm 803 into upstream and downstream sides.

In the sensing thermocouples 804 and 805, temperature detecting contacts 811 and 821 are arranged in the thin area 803a of the diaphragm 803, and reference temperature contacts 812 and 822 are arranged in the adjustment area on the outside of the thin area 803a.

In the sensing thermocouple (upstream sensing thermocouple) 804, a temperature detecting contact 811 is arranged in the thin area 803a of the diaphragm 803 and on the upstream side of the heat generator 802, and a reference temperature contact 812 is arranged on the upstream side of the thin area 803a of the diaphragm 803. In the sensing thermocouple (downstream sensing thermocouple) 805, a temperature detecting contact 821 is arranged in the thin area 803a of the diaphragm 803 and on the downstream side of the heat generator 802, and a reference temperature contact 822 is arranged on the downstream side of the thin area 803a of the diaphragm 803. Each of the temperature detecting contacts 811 and 821 and the reference temperature contact 812 and 822 is provided at a predetermined interval in the direction orthogonal to the flow direction of the measurement target gas 30.

The plural temperature detecting contacts 811 of the sensing thermocouple 804 are arranged at a predetermined interval in the flow direction of the measurement target gas 30. In the embodiment, the temperature detecting contacts 811 are arranged while divided into two on the upstream and downstream sides. A temperature detecting contact (first upstream temperature detecting contact) 811A is arranged on the upstream side in the thin area 803a on the upstream side of the heat generator 802, and a temperature detecting contact (second upstream temperature detecting contact) 811B is arranged on the downstream in the thin area 803a on the upstream side of the heat generator 802. Accordingly, the sensing thermocouple 804 can measure the temperature distribution (temperature difference) in the flow direction of the measurement target gas 30 in the thin area 803a of the diaphragm 803 and on the upstream side of the heat generator 802.

The CPU 612 detects the heat capacity in the thin area 803a that is of the heat transfer surface of the flow rate detecting portion 800 based on the temperature distribution in the flow direction of the measurement target gas 30 in the thin area 803a of the diaphragm 803 and on the upstream side of the heat generator 802. The CPU 612 calculates the heat capacity in the thin area 803a from a difference between a value measured by the temperature detecting contact 811A and a value measured by the temperature detecting contact 811B (the heat capacity calculating means). The CPU 612 compares the calculated heat capacity the heat capacity at the shipment time to estimate the thermal conductivity change amount in the thin area (the thermal conductivity change amount estimating means). The CPU 612 calibrates the flow rate detection amount Q of the measurement target gas 30 based on the estimated thermal conductivity change amount to calculate the true flow rate Qout (the calibration means). The electric signal indicating the true flow rate Qout is output through the terminal 662.

As described above, in the flow rate detecting portion 800, the temperature detecting contacts 811A and 811B of the sensing thermocouple 804 are separately arranged along the flow direction of the measurement target gas 30 in the thin area (heat transfer surface) 803a of the diaphragm 803 heated by the heat generator 802, so that the temperature distribution in the flow direction of the measurement target gas 30 can be measured in the thin area 803a of the diaphragm 803 and on the upstream side of the heat generator 802, and the heat capacity in the thin area 803a can be detected.

Accordingly, the amount of the contamination deposited on the thin area 803a can be estimated with high accuracy by comparing the detected heat capacity in the thin area 803a to the heat capacity at the shipment time, and the flow rate of the main passage 124 can be measured with high accuracy by calibrating the flow rate of the main passage 124 based on the contamination amount estimated with high accuracy.

Particularly, in the embodiment, the plural temperature detecting contacts 811 arranged on the upstream side of the heat generator 802 are arranged while divided in the flow direction of the measurement target gas 30. The contamination is easily deposited on the upstream side of the heat generator 802 in the flow direction of the measurement target gas 30, so that the configuration of the embodiment can estimate the amount of the contamination deposited on the thin area 803a with high accuracy.

In the embodiment of FIG. 14, by way of example, the temperature detecting contact 811 is arranged while divided into two groups in the flow direction of the measurement target gas 30. Alternatively, the temperature detecting contact 811 may be divided into at least three groups. In this case, the temperature distribution generated by the heating of the heat generator 802 can more finely be measured by increasing the number of groups. Accordingly, the heat capacity in the thin area 803a can finely be detected, and the state of the contamination deposited on the thin area 803a can be estimated with higher accuracy.

In the embodiment of FIG. 14, by way of example, the plural temperature detecting contacts 811 arranged on the upstream side of the heat generator 802 are arranged while divided in the flow direction of the measurement target gas 30. Alternatively, the plural temperature detecting contacts 821 arranged on the downstream side of the heat generator 802 may be arranged while divided in the flow direction of the measurement target gas 30. The heat capacity in the thin area 803a can more finely be detected by measuring more finely the temperature distribution on the downstream side of the heat generator 802, and the state of the contamination deposited on the thin area 803a can be estimated with higher accuracy.

Although the embodiments of the invention are described above in detail, the invention is not limited to the above embodiments, but various design changes can be made without departing from the scope of the invention. For example, the embodiments are described in detail for the purpose of easy understanding, but the invention is not limited to the embodiment including all the described configurations.

Industrial Availability

The present invention is applicable to a measurement apparatus for measuring a gas flow rate as described above.

Reference Signs List

300 thermal flow meter
302 housing
303 front cover
304 rear cover
305 external connector
306 external terminal
307 calibration terminal
310 measuring portion
320 terminal connector
332 front auxiliary passage trench
334 rear auxiliary passage trench
356 protrusion
361 external terminal inner contact
372 fixing portion
400 circuit package
412 connection terminal
414 terminal
424 protrusion
430 measurement passage surface
432 fixation surface
436 heat transfer surface exposing portion
438 opening
440 communication passage
452 temperature detecting portion
601 flow rate detection circuit (semiconductor member)
602 flow rate detecting portion (flow rate detecting element)
603 thin area (heat transfer surface)
604 processing unit
608 heat generator
640 heating control bridge
650 first flow rate sensing bridge
651 second flow rate sensing bridge
652, 654, 710, 712 upstream resistance thermometer bulb
672 diaphragm
656, 658, 714, 716 downstream resistance thermometer bulb
801 substrate (semiconductor member)
802 heat generator
803 diaphragm
803a thin area
804, 805 sensing thermocouple
811, 821 temperature detecting contact
811A temperature detecting contact (first upstream temperature detecting contact)
811B temperature detecting contact (second upstream temperature detecting contact)
812, 822 reference temperature contact

**Claims**

1. A thermal flow meter (300) that measures a flow rate of a measurement target gas (30) passing in a passage by transferring heat to the measurement target gas (30) through a heat transfer surface in the passage, the thermal flow meter (300) comprising:

   a semiconductor member (801) in which a thin area (603) constituting the heat transfer surface is provided;
   a heat generator (608) that is provided in the thin area (603) to heat the measurement target gas (30);
   the thermal flow meter **characterized by** temperature difference detecting means for detecting at least one of a temperature difference in a flow direction of the measurement target gas (30) in the thin area (603) and in an upstream area of an area on an upstream side of the heat generator (608), and a temperature difference in the flow direction of the measurement target gas (30) in the thin area (603) and in a downstream area of an area on a downstream side of the heat generator (608);
   heat capacity calculating means for calculating heat capacity in the thin area (603) based on a temperature difference detected by the temperature difference detecting means; and
   thermal conductivity change amount estimating means for estimating a thermal conductivity change amount in the thin area (603) based on the heat capacity calculated by the heat capacity calculating means.

2. The thermal flow meter according to claim 1, further comprising:

   upstream temperature detecting means that is arranged in the upstream area;
   downstream temperature detecting means that is arranged in the downstream area;
   flow rate calculating means for calculating the flow rate of the measurement target gas (30) based on an upstream temperature detected by the upstream temperature detecting means and a downstream temperature detected by the downstream temperature detecting means; and
   calibration means for calibrating the flow rate of the measurement target gas (30) calculated by the flow rate calculating portion based on the thermal conductivity change amount estimated by the thermal conductivity change amount estimating means.

3. The thermal flow meter according to claim 2, wherein the upstream temperature detecting means includes a first upstream resistance thermometer bulb (652, 654) and a second upstream resistance thermometer bulb (710, 712), the first and second upstream resistance thermometer bulbs (652, 654, 710, 712) being arranged while divided on an upstream side and a downstream side in the flow direction of the measurement target gas (30),
   the downstream temperature detecting means includes a first downstream resistance thermometer bulb (656, 658) and second downstream resistance thermometer bulb (714, 716), the first and second downstream resistance thermometer bulbs (656, 658, 714, 716) being arranged while divided on an upstream side and a downstream side in the flow direction of the measurement target gas (30),
   a first flow rate sensing bridge circuit (650) is formed by the first upstream resistance thermometer bulb (652, 654) and the first downstream resistance thermometer bulb (656, 658),
   a second flow rate sensing bridge circuit (651) is formed by the second upstream resistance thermometer bulb (710, 712) and the second downstream resistance thermometer bulb (714, 716),
   the flow rate calculating means calculates a temperature difference between the upstream temperature and the downstream temperature based on at least one of a first potential difference between the first upstream resistance thermometer bulb (652, 654) and the first downstream resistance thermometer bulb (656, 658) and a second potential difference between the second upstream resistance thermometer bulb (710, 712) and the second downstream resistance thermometer bulb (714, 716), and calculates the flow rate of the measurement target gas (30) based on the calculated temperature difference, and
   the temperature difference detecting means detects at least one of a temperature difference in the flow direction of the measurement target gas (30) in the upstream area and a temperature difference in the flow direction of the measurement target gas (30) in the downstream area based on the first potential difference and the second potential difference.

4. The thermal flow meter according to claim 3, wherein the second upstream resistance thermometer bulb (710, 712) is arranged on the upstream side of the first upstream resistance thermometer bulb (652, 654), and
   the second downstream resistance thermometer bulb (714, 716) is arranged on the downstream side of the first downstream resistance thermometer bulb (656, 658).

5. The thermal flow meter according to claim 3, wherein the second upstream resistance thermometer bulb (710, 712) is arranged on the upstream side of the first upstream resistance thermometer bulb (652, 654), and

the first downstream resistance thermometer bulb (656, 658) is arranged on the downstream side of the second downstream resistance thermometer bulb (714, 716).

6. The thermal flow meter according to claim 4, wherein the second upstream resistance thermometer bulb (710, 712) is arranged on the upstream side of the first upstream resistance thermometer bulb (652, 654), and
the first downstream resistance thermometer bulb (656, 658) and the second downstream resistance thermometer bulb (714, 716) are arrayed in a direction orthogonal to the flow direction of the measurement target gas.

7. The thermal flow meter according to claim 2, wherein the upstream temperature detecting means includes an upstream sensing thermocouple (804) in which a temperature detecting contact is arranged in the thin area (603) and on the upstream side of the heat generator (608),
the downstream temperature detecting means includes a downstream sensing thermocouple (805) in which a temperature detecting contact is arranged in the thin area (603) and on the downstream side of the heat generator (608),
the temperature detecting contact of the upstream sensing thermocouple (804) includes a first upstream temperature detecting contact (811A) and a second upstream temperature detecting contact (811B), the first and second upstream temperature detecting contacts (811A,B) being arranged while divided into an upstream side and a downstream side in the flow direction of the measurement target gas (30),
the flow rate calculating means calculates a temperature difference between an upstream temperature detected by the upstream sensing thermocouple (804) and a downstream temperature detected by the downstream sensing thermocouple (805), and calculates the flow rate of the measurement target gas (30) based on the calculated temperature difference, and
the temperature difference detecting means detects the temperature difference in the flow direction of the measurement target gas (30) using a temperature at the first upstream temperature detecting contact (811A) and a temperature at the second upstream temperature detecting contact (811B).

**Patentansprüche**

1. Thermischer Durchflussmesser (300), der eine Durchflussmenge eines Messzielgases (30), das einen Durchgang durchläuft, durch Übertragen von Wärme zum Messzielgas (30) über eine Wärmeübertragungsfläche im Durchgang misst, wobei der thermische Durchflussmesser (300) Folgendes umfasst:

ein Halbleiterelement (801), in dem ein dünner Bereich (603), der die Wärmeübertragungsfläche bildet, vorgesehen ist; und
einen Wärmegenerator (608), der im dünnen Bereich (603) vorgesehen ist, um das Messzielgas (30) zu erhitzen; wobei
der thermische Durchflussmesser **gekennzeichnet ist durch**
ein Temperaturdifferenzdetektionsmittel zum Detektieren einer Temperaturdifferenz in einer Durchflussrichtung des Messzielgases (30) im dünnen Bereich (603) und in einem stromaufseitigen Bereich eines Bereichs auf einer stromaufwärts gelegenen Seite des Wärmegenerators (608) und/oder einer Temperaturdifferenz in der Durchflussrichtung des Messzielgases (30) im dünnen Bereich (603) und in einem stromabseitigen Bereich eines Bereichs auf einer stromabwärts gelegenen Seite des Wärmegenerators (608);
ein Wärmekapazitätsberechnungsmittel zum Berechnen der Wärmekapazität im dünnen Bereich (603) auf der Grundlage einer Temperaturdifferenz, die durch das Temperaturdifferenzdetektionsmittel detektiert wird; und
ein Wärmeleitfähigkeitsänderungsbetrag-Schätzmittel zum Schätzen eines Wärmeleitfähigkeitsänderungsbetrags im dünnen Bereich (603) auf der Grundlage der Wärmekapazität, die durch das Wärmekapazitätsberechnungsmittel berechnet wird.

2. Thermischer Durchflussmesser nach Anspruch 1, der ferner Folgendes umfasst:

ein stromaufseitiges Temperaturdetektionsmittel, das im stromaufseitigen Bereich angeordnet ist;
ein stromabseitiges Temperaturdetektionsmittel, das im stromabseitigen Bereich angeordnet ist;
ein Durchflussmengenberechnungsmittel zum Berechnen der Durchflussmenge des Messzielgases (30) auf der Grundlage einer stromaufseitigen Temperatur, die durch das stromaufseitige Temperaturdetektionsmittel detektiert wird, und einer stromabseitigen Temperatur, die durch das stromabseitige Temperaturdetektionsmittel detektiert wird; und
ein Kalibriermittel zum Kalibrieren der Durchflussmenge des Messzielgases (30), die durch den Durchflussmengenberechnungsabschnitt berechnet wird, auf der Grundlage des Wärmeleitfähigkeitsänderungsbetrags, der durch das Wärmeleitfähigkeitsänderungsbetrag-Schätzmittel geschätzt wird.

3. Thermischer Durchflussmesser nach Anspruch 2, wobei
das stromaufseitige Temperaturdetektionsmittel eine erste stromaufseitige Widerstandsthermometerkugel (652, 654) und eine zweite stromaufseitige Widerstandsthermometerkugel (710, 712) enthält, wobei die erste und die zweite stromaufseitige Widerstandsthermometerkugel (652, 654, 710, 712) angeordnet sind, wobei sie auf einer stromaufwärts gelegenen Seite und einer stromabwärts gelegenen Seite in der Durchflussrichtung des Messzielgases (30) verteilt sind,
das stromabseitige Temperaturdetektionsmittel eine erste stromabseitige Widerstandsthermometerkugel (656, 658) und eine zweite stromabseitige Widerstandsthermometerkugel (714, 716) enthält, wobei die erste und die zweite stromabseitige Widerstandsthermometerkugel (652, 654, 710, 712) angeordnet sind, wobei sie auf einer stromaufwärts gelegenen Seite und einer stromabwärts gelegenen Seite in der Durchflussrichtung des Messzielgases (30) verteilt sind,
eine erste Durchflussmengenerfassungsbrückenschaltung (650) durch die erste stromaufseitige Widerstandsthermometerkugel (652, 654) und die erste stromabseitige Widerstandsthermometerkugel (656, 658) gebildet ist,
eine zweite Durchflussmengenerfassungsbrückenschaltung (651) durch die zweite stromaufseitige Widerstandsthermometerkugel (710, 712) und die zweite stromabseitige Widerstandsthermometerkugel (714, 716) gebildet ist,
das Durchflussmengenberechnungsmittel eine Temperaturdifferenz zwischen der stromaufseitigen Temperatur und der stromabseitigen Temperatur auf der Grundlage einer ersten Potentialdifferenz zwischen der ersten stromaufseitigen Widerstandsthermometerkugel (652, 654) und der ersten stromabseitigen Widerstandsthermometerkugel (656, 658) und/oder einer zweiten Potentialdifferenz zwischen der zweiten stromaufseitigen Widerstandsthermometerkugel (710, 712) und der zweiten stromabseitigen Widerstandsthermometerkugel (714, 716) berechnet und die Durchflussmenge des Messzielgases (30) auf der Grundlage der berechneten Temperaturdifferenz berechnet und
das Temperaturdifferenzdetektionsmittel eine Temperaturdifferenz in der Durchflussrichtung des Messzielgases (30) im stromaufseitigen Bereich und/oder eine Temperaturdifferenz in der Durchflussrichtung des Messzielgases (30) im stromabseitigen Bereich auf der Grundlage der ersten Potentialdifferenz und der zweiten Potentialdifferenz detektiert.

4. Thermischer Durchflussmesser nach Anspruch 3,
wobei
die zweite stromaufseitige Widerstandsthermometerkugel (710, 712) auf der stromaufwärts gelegenen Seite der ersten stromaufseitigen Widerstandsthermometerkugel (652, 654) angeordnet ist und
die zweite stromabseitige Widerstandsthermometerkugel (714, 716) auf der stromabwärts gelegenen Seite der ersten stromabseitigen Widerstandsthermometerkugel (656, 658) angeordnet ist.

5. Thermischer Durchflussmesser nach Anspruch 3,
wobei
die zweite stromaufseitige Widerstandsthermometerkugel (710, 712) auf der stromaufwärts gelegenen Seite der ersten stromaufseitigen Widerstandsthermometerkugel (652, 654) angeordnet ist und
die erste stromabseitige Widerstandsthermometerkugel (656, 658) auf der stromabwärts gelegenen Seite der zweiten stromabseitigen Widerstandsthermometerkugel (714, 716) angeordnet ist.

6. Thermischer Durchflussmesser nach Anspruch 4,
wobei
die zweite stromaufseitige Widerstandsthermometerkugel (710, 712) auf der stromaufwärts gelegenen Seite der ersten stromaufseitigen Widerstandsthermometerkugel (652, 654) angeordnet ist und
die erste stromabseitige Widerstandsthermometerkugel (656, 658) und die zweite stromabseitige Widerstandsthermometerkugel (714, 716) in einer Richtung, die zur Durchflussrichtung des Messzielgases senkrecht ist, aufgereiht sind.

7. Thermischer Durchflussmesser nach Anspruch 2,
wobei
das stromaufseitige Temperaturdetektionsmittel ein stromaufseitiges Erfassungsthermoelement (804) enthält, in dem ein Temperaturdetektionskontakt im dünnen Bereich (603) und auf der stromaufwärts gelegenen Seite des Wärmegenerators (608) angeordnet ist,
das stromabseitige Temperaturdetektionsmittel ein stromabseitiges Erfassungsthermoelement (805) enthält, in dem ein Temperaturdetektionskontakt im dünnen Bereich (603) und auf der stromabwärts gelegenen Seite des Wärmegenerators (608) angeordnet ist,
der Temperaturdetektionskontakt des stromaufseitigen Erfassungsthermoelements (804) einen ersten stromaufseitigen Temperaturdetektionskontakt (811A) und einen zweiten stromaufseitigen Temperaturdetektionskontakt (811B) enthält, wobei der erste und der zweite stromaufseitige Temperaturdetektionskontakt (811A,B) angeordnet sind, wobei sie auf einer stromaufwärts gelegenen Seite und einer stromabwärts gelegenen Seite in der Durchflussrichtung des Messzielgases (30) verteilt sind,
das Durchflussmengenberechnungsmittel eine Temperaturdifferenz zwischen einer stromaufseitigen Temperatur, die durch das stromaufseitige Erfassungsthermoelement (804) detektiert wird, und einer stromabseitigen Temperatur, die durch das stromabseitige Erfassungsthermoelement (805) detektiert wird, berechnet und die Durchflussmenge des Messzielgases (30) auf der Grundlage der berechneten Temperaturdifferenz berechnet und das Temperaturdifferenzdetektionsmittel eine Temperaturdifferenz in der Durchflussrichtung des Messzielgases (30) unter Verwendung einer Temperatur beim ersten stromaufseitigen Temperaturdetektionskontakt (811A) und einer Temperatur beim zweiten stromaufseitigen Temperaturdetektionskontakt (811B) detektiert.

## Revendications

1. Débitmètre thermique (300) qui mesure un débit d'un gaz cible à mesurer (30) passant dans un passage par transfert thermique jusqu'au gaz cible à mesurer (30) à travers une surface de transfert thermique dans le passage, le débitmètre thermique (300) comprenant :

    un élément semi-conducteur (801) dans lequel est prévue une zone mince (603) constituant la surface de transfert thermique ;
    un générateur de chaleur (608) qui est prévu dans la zone mince (603) pour chauffer le gaz cible à mesurer (30) ;
    le débitmètre thermique étant **caractérisé par** un moyen de détection de différence de température destiné à détecter au moins une différence parmi une différence de température dans une direction d'écoulement du gaz cible à mesurer (30) dans la zone mince (603) et dans une zone en amont d'une zone sur un côté amont du générateur de chaleur (608), et une différence de température dans la direction d'écoulement du gaz cible à mesurer (30) dans la zone mince (603) et dans une zone en aval d'une zone sur un côté aval du générateur de chaleur (608) ;
    un moyen de calcul de capacité thermique destiné à calculer une capacité thermique dans la zone mince (603) sur la base d'une différence de température détectée par le moyen de détection de différence de température ; et
    un moyen d'estimation de changement quantitatif de conductivité thermique destiné à estimer un changement quantitatif de conductivité thermique dans la zone mince (603) sur la base de la capacité thermique calculée par le moyen de calcul de capacité thermique.

2. Débitmètre thermique selon la revendication 1, comprenant en outre :

    un moyen de détection de température amont qui est agencé dans la zone amont ;
    un moyen de détection de température aval qui est agencé dans la zone aval ;
    un moyen de calcul de débit destiné à calculer le débit du gaz cible à mesurer (30) sur la base d'une température amont détectée par le moyen de détection de température amont et d'une température aval détectée par le moyen de détection de température aval ; et
    un moyen d'étalonnage destiné à étalonner le débit du gaz cible à mesurer (30) calculé par la portion de calcul de débit sur la base du changement quantitatif de conductivité thermique estimé par le moyen d'estimation de changement quantitatif de conductivité thermique.

3. Débitmètre thermique selon la revendication 2, dans lequel

le moyen de détection de température amont inclut une première ampoule de thermomètre à résistance amont (652, 654) et une seconde ampoule de thermomètre à résistance amont (710, 712), la première et la seconde ampoule de thermomètre à résistance amont (652, 654, 710, 712) étant agencées tout en étant divisées sur un côté amont et sur un côté aval dans la direction d'écoulement du gaz cible à mesurer (30),
le moyen de détection de température aval inclut une première ampoule de thermomètre à résistance aval (656, 658) et une seconde ampoule de thermomètre à résistance aval (714, 716), la première et la seconde ampoule de thermomètre à résistance aval (656, 658, 714, 716) étant agencées tout en étant divisées sur un côté amont et sur un côté aval dans la direction d'écoulement du gaz cible à mesurer (30),
un premier circuit en pont de détection de débit (650) est formé par la première ampoule de thermomètre à résistance amont (652, 654) et par la première ampoule de thermomètre à résistance aval (656, 658),
un second circuit en pont de détection de débit (651) est formé par la seconde ampoule de thermomètre à résistance amont (710, 712) et par la seconde ampoule de thermomètre à résistance aval (714, 716),
le moyen de calcul de débit calcule une différence de température entre la température amont et la température aval sur la base d'au moins une première différence de potentiel entre la première ampoule de thermomètre à résistance amont (652, 654) et la première ampoule de thermomètre à résistance aval (656, 658) et une seconde différence de potentiel entre la seconde ampoule de thermomètre à résistance amont (710, 712) et la seconde ampoule de thermomètre à résistance aval (714, 716), et calcule le débit du gaz cible à mesurer (30) sur la base de la différence de température calculée, et
le moyen de détection de différence de température détecte au moins une différence de température parmi une différence de température dans la direction d'écoulement du gaz cible à mesurer (30) dans la zone amont et une différence de température dans la direction d'écoulement du gaz cible à mesurer (30) dans la zone aval sur la base de la première différence de potentiel et de la seconde différence de potentiel.

4. Débitmètre thermique selon la revendication 3, dans lequel
   la seconde ampoule de thermomètre à résistance amont (710, 712) est agencée sur le côté amont de la première ampoule de thermomètre à résistance amont (652, 654), et
   la seconde ampoule de thermomètre à résistance aval (714, 716) est agencée sur le côté aval de la première cuve ampoule de thermomètre à résistance aval (656, 658).

5. Débitmètre thermique selon la revendication 3, dans lequel
   la seconde ampoule de thermomètre à résistance amont (710, 712) est agencée sur le côté amont de la première ampoule de thermomètre à résistance amont (652, 654), et
   la première ampoule de thermomètre à résistance aval (656, 658) est agencée sur le côté aval de la seconde ampoule de thermomètre à résistance aval (714, 716).

6. Débitmètre thermique selon la revendication 4, dans lequel
   la seconde ampoule de thermomètre à résistance amont (710, 712) est agencée sur le côté amont de la première ampoule de thermomètre à résistance amont (652, 654), et
   la première ampoule de thermomètre à résistance aval (656, 658) et la seconde ampoule de thermomètre à résistance aval (714, 716) sont disposées en rangée dans une direction orthogonale à la direction d'écoulement du gaz cible à mesurer.

7. Débitmètre thermique selon la revendication 2, dans lequel
   le moyen de détection de température amont inclut un thermocouple de détection amont (804) dans lequel un contact de détection de température est agencé dans la zone mince (603) et sur le côté amont du générateur de chaleur (608),
   le moyen de détection de température aval inclut un thermocouple de détection aval (805) dans lequel un contact de détection de température est agencé dans la zone mince (603) et sur le côté aval du générateur de chaleur (608),
   le contact de détection de température du thermocouple de détection amont (804) inclut un premier contact de détection de température amont (811A) et un second contact de détection de température amont (811B), le premier et le second contact de détection de température amont (811A, B) étant agencés tout en étant divisés en un côté amont et un côté aval dans la direction d'écoulement du gaz cible à mesurer (30),
le moyen de calcul de débit calcule une différence de température entre une température amont détectée par le thermocouple de détection amont (804) et une température aval détectée par le thermocouple de détection aval (805), et calcule le débit du gaz cible à mesurer (30) sur la base de la différence de température calculée, et
le moyen de détection de différence de température détecte la différence de température dans la direction d'écoulement du gaz cible à mesurer (30) en utilisant une température au niveau du premier contact de détection de température amont (811A) et une température au niveau du second contact de détection de température amont (811B).

FIG. 1

EP 3 021 091 B1

FIG. 2

(A)

305 312 317 343 452 303 304 350

(B)

305 312 315 318 302 303 310 352 30

316 321 317 322 452 344 30 30

FIG. 3

# FIG. 4

FIG. 5

(A)

(B)

FIG. 6

# FIG. 7

(C)

(A)

(B)

# FIG. 8

(C)

304
381

(A)

381
304

(B)

325
345
304

FIG. 9

FIG. 10

# FIG. 11

# FIG. 12

# FIG. 13

# FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007279036 A
- EP 1065475 A
- US 2004098210 A1
- US 2008295590 A1
- EP 1992917 A2